Europäisches Patentamt

European Patent Office

Office européen des brevets

(19)

(11) Veröffentlichungsnummer : **0 218 280 B1**

(12) **EUROPÄISCHE PATENTSCHRIFT**

(45) Veröffentlichungstag der Patentschrift :
**14.12.94 Patentblatt 94/50**

(51) Int. Cl.⁵ : **G06F 9/38,** G06F 9/46

(21) Anmeldenummer : **86201552.6**

(22) Anmeldetag : **09.09.86**

(54) **Datenverarbeitungsanordnung.**

(30) Priorität : **12.09.85 DE 3532481**

(43) Veröffentlichungstag der Anmeldung :
**15.04.87 Patentblatt 87/16**

(45) Bekanntmachung des Hinweises auf die
Patenterteilung :
**14.12.94 Patentblatt 94/50**

(84) Benannte Vertragsstaaten :
**DE FR GB IT**

(56) Entgegenhaltungen :
**ELECTRONICS INTERNATIONAL, Band 55, Nr.
22, November 1982, Seiten 71-72, New York,
US; J. GOSCH: "Microprocessor does multitasking in real time"
INMOS PRELIMINARY DATA: "IMS T424
TRANSPUTER", 1984, Seiten 1-31, Firma IN-
MOS,Colorado Springs, US
EUROMICRO NEWSLETTER, Band 2, Nr. 4,
Oktober 1976, Seiten 40-47, Compiegne, FR;F.
ROMANI: "A pipeline architecture oriented
towards efficient multitasking"
CONFERENCE PROCEEDINGS, The 7th annual symposium on computer architecture,
6.-8. Mai 1980, Seiten 146-160, IEEE, Long
Beach, US; B.W. LAMPSON et al.: "A processor for a high-performance personal computer"**

(56) Entgegenhaltungen :
**ELEKTRONIK, Band 32, Nr. 7, April 1983, Seiten 53-57, München, DE; T. BUNATA etal.:
"16-Bit-Mikroprozessor für Echtzeit-Multi-
task-Betrieb"**

(73) Patentinhaber : **Philips Patentverwaltung
GmbH
Wendenstrasse 35c
D-20097 Hamburg (DE)**
(84) **DE**
Patentinhaber : **N.V. Philips'
Gloeilampenfabrieken
Groenewoudseweg 1
NL-5621 BA Eindhoven (NL)**
(84) **FR GB IT**

(72) Erfinder : **Zimmer, Günther
Celsiusweg 16
D-2000 Hamburg 50 (DE)**
Erfinder : **Braune, Dirk
132, Boulevard de l'Hopital
T5013
F- Paris (FR)**
Erfinder : **Kaplinsky, Cecil
1231 Wilson Street
Palo Ato, CA 94301 (US)**

(74) Vertreter : **Poddig, Dieter, Dipl.-Ing. et al
Philips Patentverwaltung GmbH
Wendenstrasse 35c
D-20097 Hamburg (DE)**

EP 0 218 280 B1

## Beschreibung

Die Erfindung betrifft eine Datenverarbeitungsanordnung mit einem Befehlsspeicher mit nachgeschaltetem Befehlsregister zur Aufnahme von Befehlswörtern, einer Programmablaufsteuerung, die den Befehlsspeicher adressiert und gegebenenfalls abhängig von Bedingungssignalen die jeweils nächste Adresse des Befehlsspeichers erzeugt, einer Verknüpfungsanordnung, die zwei zugeführte Datenwörter entsprechend von im Befehlswort enthaltenen Informationen verknüpft, einem der Verknüpfungsanordnung zugeordneten Pufferspeicher für das Verknüpfungsergebnis und/oder ein der Verknüpfungsanordnung zuzuführendes Datenwort, einem Datenspeicher, der durch im Befehlswort enthaltene Informationen adressiert wird und dessen Datenein- und -ausgänge mit einem Eingang bzw. einem Ausgang der Verknüpfungsanordnung gekoppelt sind, einer nach außerhalb der Datenverarbeitungsanordnung führenden Verbindung und einem Taktgenerator zur zyklisch wiederholten Erzeugung einer Folge von gegeneinander zeitverschobenen Taktsignalen.

Derartige Datenverarbeitungsanordnungen sind in verschiedenen Ausführungen bekannt, beispielsweise die Type MAB 8041A oder die Typenfamilie MAB 8400 aus dem Datenbuch von 1984 über 8 Bit-Einchip-Mikrocontroller der Firma VALVO. Derartige Anordnungen sind dafür vorgesehen, jeweils nur eine Aufgabe auszuführen, d.h. einen Prozeß durchzuführen. Es können zwar durch Programmverzweigungen, die beispielsweise durch externe Bedingungssignale oder auch Unterbrechungssignale ausgelöst werden können, nacheinander mehrere verschiedene Aufgaben ausgeführt werden, und zwar auch kurz nacheinander, jedoch ist eine weitgehend zeitparallele Durchführung mehrerer verschiedener Prozesse nicht oder nur mit äußerst hohem Aufwand an Programmen möglich, wodurch die Durchführung der Prozesse so langsam wird, daß die Geschwindigkeit in vielen praktischen Fällen nicht ausreicht. In solchen zeitkritischen Fällen werden daher mehrere derartiger Anordnungen verwendet, wobei jedem Prozeß eine Anordnung zugeordnet wird. Dies erhöht jedoch erheblich den Aufwand.

Das Dokument ELEKTRONIK, Band 32, Nr. 7, April 1983, Seiten 53-57, München, DE; T. BUNATA et al.: "16-bit-Mikroprozessor für Echtzeit-Multitask-Betrieb" beschreibt eine Datenverarbeitungsanordnung, die eine Anzahl Prozesse zeitverschachtelt durchführen kann. Ein Task-Scheduler bestimmt, welcher Prozeß jeweils aktiv sein soll. Jedoch ist jeden Prozeß eine feste Priorität zugeordnet, so daß der Task-Scheduler einen komplizierten Aufbau aufweist, und der Ablauf der einzelnen Prozesse voneinander abhängig ist.

Das Dokument EUROMICRO NEWSLETTER, Band 2, Nr. 4, Oktober 1976, Seiten 40-47, Compiègne, FR; F. ROMANI: "A pipeline architecture oriented towards efficient multitasking" beschreibt auch eine Datenverarbeitungsanordnung, die eine Anzahl Prozesse verschachtelt durchführen kann. Jedoch erfolgt diese verschachtelte Ausführung auf einer Befehlsebene. In diesem Dokument ist auch erwähnt, daß die Berücksichtigung verschiedener Prioritäten möglich ist, so daß der jeweils nächste Befehl abhängig von verschiedenen Bedingungen und Abläufen in der Anlage ausgelöst wird.

Aufgabe der Erfindung ist es daher, eine Datenverarbeitungsanordnung der eingangs genannten Art anzugeben, die die schnelle Durchführung mehrerer Programme quasi zeitparallel mit geringem Aufwand ermöglicht.

Diese Aufgabe wird erfindungsgemäß durch eine Datenverarbeitungsanordnung nach Anspruch 1 gelöst.

Es ist also nur ein geringer zusätzlicher Aufwand erforderlich, nämlich die Folgesteueranordnung, die einfach aufgebaut sein kann, sowie ein mehrfaches Befehlsadreßregister und eine Erweiterung des Pufferspeichers und die Verbindungsschaltungen für Ein- und Ausgänge, wobei angenommen wird, daß zumindest ein Teil der nach außen führenden bzw. von außen kommenden Steuerleitungen für verschiedene Prozesse unterschiedlich sind. Wenn jedoch insbesondere die Bedingungssignale erzeugenden Eingangssignale bzw. vom Befehlswort abgeleiteten Ausgangssignale für jeden Prozeß nur sehr wenige oder gar nur ein Signal umfassen, können diese auch ohne Verbindungsschaltungen parallel zugeführt bzw. abgeleitet werden, wobei in jedem Prozeß nur die diesem zugeordneten Bedingungssignale im Adressengenerator berücksichtigt und die übrigen maskiert werden und das Befehlswort eine entsprechende Breite aufweist.

Durch die erfindungsgemäßen Maßnahmen können mehrere Prozesse quasi zeitparallel durchgeführt werden, d.h. die Befehle der einzelnen Prozesse können in beliebiger Zeitfolge verschachtelt werden, ohne daß besondere Maßnahmen für die jeweiligen Programme der einzelnen Prozesse erforderlich sind. Die einzelnen quasi zeitparallel ablaufenden Prozesse werden lediglich in dem Ausmaße langsamer, wie durch die Anzahl gleichzeitig ausgeführter Prozesse bestimmt ist. Die Zeitverschachtelung der Ausführung der Prozesse erfolgt beispielsweise auf der Basis einzelner Befehle, wobei im übrigen die einzelnen Befehle der einzelnen Prozesse nicht unbedingt streng zyklisch aufeinanderfolgen, sondern die Befehle einzelner Prozesse können auch mit größerer oder geringerer Häufigkeit aufgerufen werden als die Befehle anderer Prozesse, abhängig von den möglicherweise unterschiedlichen Zeitbedingungen der einzelnen Prozesse. Dies wird nur durch den entsprechenden Aufbau der Folgesteueranordnung ohne zusätzlichen Aufwand erreicht.

Die Ausführung jedes Befehls des Befehlsspeichers erfordert eine Anzahl Verarbeitungsschritte, die nacheinander ablaufen. Die Geschwindigkeit dieses Ablaufs ist im wesentlichen durch die Taktfrequenz des Taktgenerators bestimmt, die auf die Verarbeitungsgeschwindigkeit der einzelnen Elemente der Datenverarbeitungsanordnung abgestimmt ist. Um ohne Veränderung dieser Verarbeitungsgeschwindigkeit eine Beschleunigung der Durchführung der einzelnen Prozesse zu ermöglichen, ist eine Ausgestaltung der Erfindung dadurch gekennzeichnet, daß der Ausgang des Adressenspeichers außerdem mit dem Eingang eines Befehlsadreßregisters und der Ausgang der Folgesteueranordnung außerdem mit dem Eingang eines Folgesteuerregisters verbunden ist, wobei der Adressenspeicher zum Lesen von dem Folgesteuersignal am Ausgang der Folgesteueranordnung und der Adressenspeicher zum Schreiben sowie der Pufferspeicher und die Verbindungsschaltungen von dem Folgesteuersignal am Ausgang des Folgesteuerregisters adressiert werden, und daß Steuertakteingänge des Befehlsregisters, des Befehlsadreßregisters, des Adressenspeichers, des Folgesteuerregisters, des Pufferspeichers und des Datenspeichers derart mit Taktausgängen des Taktgenerators verbunden sind, daß die Aufeinanderfolge

Erzeugung der Folgesteuersignale,

Adressierung des Adresspeichers und Auslesen einer neuen Adresse für den Befehlsspeicher,

Auslesen des adressierten Befehlswortes und schließlich

Abspeichern des Befehlswortes im Befehlsregister, der neuen Adresse im Befehlsadreßregister und des Folgesteuersignals im Folgesteuerregister,

parallel zu der Aufeinanderfolge

Auslesen der vom Befehlsregister adressierten Stelle des Datenspeichers und des vom Folgesteuerregister adressierten Speicherplatzes des Pufferspeichers,

Verarbeiten der ausgelesenen Daten sowie Erzeugung der neuen Befehlsspeicheradresse im Adressengenerator abhängig vom Inhalt des Befehlsadreßregisters und/oder den anderen Signalen und schließlich

Abspeichern des Verknüpfungsergebnisses im Datenspeicher bzw. im Pufferspeicher und Abspeichern der neuen Befehlsspeicheradresse im Adressenspeicher

erfolgt, so daß jeweils mindestens zwei Prozesse im wesentlichen parallel ausgeführt werden. Auf diese Weise wird eine sogenannte "Pipeline-Struktur" gebildet, durch die die Geschwindigkeit der Durchführung der einzelnen Prozesse im wesentlichen verdoppelt wird, ohne daß die Verarbeitungsgeschwindigkeit erhöht wird. Dafür sind lediglich an bestimmten wenigen Stellen einfache Pufferregister erforderlich, wodurch dann die Ausführung des nächsten Befehls bereits begonnen werden kann, bevor der vorhergehende Befehl vollständig ausgeführt ist. Bei einer derartigen Zeitverschachtelung der einzelnen Befehle ist es allerdings häufig nicht möglich, mehrere Befehle des selben Prozesses unmittelbar hintereinander auszuführen, jedoch stellt dieses in den praktischen Fällen fast nie eine Einschränkung dar.

Die Folgesteuerung kann in verschiedener Weise aufgebaut sein, im einfachsten Falle als Zähler, wobei die Zählerstellungen dann die Folgesteuersignale darstellen. Dies ergibt jedoch eine wenig flexible Ausführung. Eine Folgesteueranordnung, die dagegen weitgehend flexibel an die Ausführung verschiedener Prozesse bzw. Kombinationen von Prozessen angepaßt werden kann, ist gemäß einer weiteren Ausgestaltung der Erfindung dadurch gekennzeichnet, daß die Folgesteueranordnung

einen Folgezähler, dessen Kapazität mindestens gleich der maximalen Anzahl unterschiedlicher Folgesteuersignale ist, und

einen vom Folgezähler adressierten Folgesteuerspeicher aufweist, der in aufeinanderfolgenden Speicherplätzen unterschiedliche Folgesteuersignale enthält. Durch die Verwendung eines Folgesteuerspeichers kann die Folge der einzelnen Prozesse sehr freizügig gewählt werden, insbesondere wenn der Folgezähler eine Kapazität hat, die die Anzahl der quasi zeitparallel durchzuführenden Prozesse erheblich übersteigt, wie später ausgeführt wird.

Die vorstehend angegebene Ausführung der Folgesteueranordnung erfordert zusätzliche Schritte zur Erzeugung des jeweils nächsten Folgesteuersignals, wodurch die Ausführung eines Befehls sich wieder etwas verlängert. Um diese Verlängerung im Rahmen der vorher angegebenen Ausgestaltung zur zeitverschachtelten Durchführung aufeinanderfolgender Befehle nach dem "Pipeline-Prinzip" zu vermeiden, ist eine Weiterbildung der Erfindung dadurch gekennzeichnet, daß die Folgesteueranordnung ein weiteres Folgesteuerregister enthält, das die Folgesteuersignale abgibt, und daß Steuertakteingänge des Folgezählers, des Folgespeichers und des weiteren Folgesteuerregisters derart mit Taktausgängen des Taktgenerators verbunden sind, daß die Aufeinanderfolge

Weiterschalten des Folgezählers,

Auslesen des Folgesteuerspeichers,

Einschreiben es ausgelesenen Folgesteuersignals in das weitere Folgesteuerregister im wesentlichen prallel zu den anderen beiden Aufeinanderfolgen erfolgt. Auf diese Weise werden die Verarbeitungsschritte jedes Befehls in drei Gruppen unterteilt, die in drei Ebenen zeitverschachtelt durchgeführt werden.

Wie bereits ausgeführt, ist die Kapazität des Folgezählers zweckmäßig größer als die Anzahl gleichzeitig durchzuführender Prozesse, um die Flexibilität zu erhöhen. Eine dynamische Anpassung an wechselnde Bedingungen kann nach einer Weiterbildung der Erfindung dadurch erreicht werden, daß die Kapazität des Folgezählers durch Steuersignale einstellbar ist. Diese Steuersignale können in der Datenverarbeitungsanordnung erzeugt oder von außen zugeführt sein. In entsprechender Weise ist eine weitere bzw. andere dynamische Anpassung an sich ändernde Bedingungen dadurch möglich, daß der Inhalt des Folgesteuerspeichers änderbar ist. Auch dies kann durch innerhalb der Datenverarbeitungsanordnung erzeugte Signale oder von außerhalb zugeführte Signale bzw. Daten erfolgen.

Die von der Datenverarbeitungsanordnung gebildeten Verarbeitungsergebnisse, insbesondere die Ausgangswerte der Verknüpfungsanordnung, befinden sich im wesentlichen im Datenspeicher. Damit diese Verknüpfungsergebnisse insbesondere von Geräten, die von der nach außerhalb der Datenverarbeitungsanordnung führenden Verbindung angeschlossen sind, verarbeitet werden können, ist häufig noch eine weitere Verarbeitung bzw. Umsetzung erforderlich. Eine derartige Umsetzung kann nach einer weiteren Ausgestaltung der Erfindung einfach dadurch erreicht werden, daß ein erster Festwertspeicher vorgesehen ist, der von der momentanen bzw. der im Befehlsadreßspeicher gespeicherten Adresse des Befehlsspeichers, den aus dem Datenspeicher ausgelesenen Daten und zumindest einigen Bedingungssignalen adressiert wird und dessen Datenausgang über einen vom Befehlswort gesteuerten ersten Umschalter anstelle des Ausgangs der Verknüpfungsanordnung mit dem Eingang des Pufferspeichers und/oder des Datenspeichers verbindbar ist. Die dadurch gewonnenen umgesetzten Verarbeitungsergebnisse befinden sich dann wieder direkt oder gegebenenfalls nach einem folgenden Schritt im Datenspeicher und können über die nach außerhalb der Datenverarbeitungsanordnung führende Verbindung ausgegeben werden.

Für manche Verarbeitungsschritte sind bestimmte konstante Datenwerte oder konstante Masken für Verarbeitungsergebnisse erforderlich. Um auf solche Konstanten bzw. Maskenwörter schnell zugreifen zu können, ist eine weitere Ausgestaltung der Erfindung dadurch gekennzeichnet, daß ein zweiter Festwertspeicher vorgesehen ist, der von der momentanen bzw. der im Befehlsadressenspeicher gespeicherten Adresse des Befehlsspeichers und zumindest einigen Bedingungssignalen adressiert wird und dessen Datenausgang über einen vom Befehlswort gesteuerten zweiten Umschalter anstelle des Pufferspeichers mit einem Eingang der Verknüpfungsanordnung verbindbar ist. Auf diese Weise können aus dem Datenspeicher ausgelesene Datenwörter in der Verknüpfungsanordnung einfach mit konstanten Werten verknüpft werden. Die dadurch gewonnenen Ergebnisse können wieder im Datenspeicher abgespeichert und danach nach außerhalb abgegeben werden.

Für die zeitverschachtelte Durchführung von zwei bzw. drei Befehlen in verschiedenen Elementen der Datenverarbeitungsanordnung sind, wie bereits ausgeführt, von entsprechenden Taktsignalen gesteuerte Register erforderlich. Eine noch zuverlässigere zeitverschachtelte Durchführung von mehreren Befehlen ist nach einer weiteren Ausgestaltung der Erfindung möglich, wenn den beiden Eingängen der Verknüpfungsanordnung sowie den Eingängen für Datensignale und/oder Bedingungssignale des Adressengenerators und gegebenenfalls des ersten Festwertspeichers je ein Pufferregister vorgeschaltet ist und alle Pufferregister die zugeführten Informationen unmittelbar nach dem Auslesen des Datenspeichers bzw. Pufferspeichers übernehmen. Insbesondere bei bestimmten technischen Ausführungen der Datenverarbeitungsanordnung als integrierte Schaltung, beispielsweise in dynamischer MOS-Schaltungstechnik, ist dies vorteilhaft, da dann für einzelne Verarbeitungsschritte eine genau definierte Verarbeitungszeit zur Verfügung steht.

Wie bereits erwähnt, werden zumindest ein Teil der Bedingungssignale von Eingangssignalen der nach außerhalb führenden Verbindung abgeleitet. Ein weiteres Bedingungssignal kann bekanntlich auch von einem Steuerausgang der Verknüpfungsanordnung abgeleitet werden, wobei der Steuerausgang auch mehrere Bits führen kann, die beispielsweise Übertrag, Nulldurchgang oder Vorzeichenwechsel des Verknüpfungsergebnisses angeben. Damit derartige am Steuerausgang auftretende Verknüpfungsergebnisse im jeweils nächsten Befehl des gleichen Prozesses verarbeitet werden können, zwischen dem meist mehrere Befehle anderer Prozesse ausgeführt werden, ist es nach einer weiteren Ausgestaltung der Erfindung zweckmäßig, daß einem Steuerausgang (Übertrag, Nulldurchgang bzw. Vorzeichenwechsel) der Verknüpfungsanordnung ein Flagspeicher mit einer ebenfalls durch die Anzahl unterschiedlicher Folgesteuersignale bestimmten Anzahl Speicherplätze, die von den Folgesteuersignalen adressiert sind, nachgeschaltet ist, wobei der Ausgang des Flagspeichers mindestens ein Bedingungssignal liefert. Dieser Flagspeicher ist also weitgehend entsprechend dem Pufferspeicher ausgebildet und in gleicher Weise angesteuert.

Die Verbindungsschaltungen für die nach außerhalb führende Verbindung müssen dafür sorgen, daß beim Verarbeiten eines Befehls eines bestimmten Prozesses die dafür zugeordneten Eingangssignale zugeführt bzw. die zugehörigen Ausgangssignale ausgegeben werden. Um dies auf einfache Weise zu erreichen, ist eine weitere Ausgestaltung der Erfindung dadurch gekennzeichnet,

daß die Verbindungsschaltung für die Bedingungssignale ein von den Folgesteuersignalen gesteuerter Mehrfach-Multiplexer ist, der zumindest einige der Bedingungssignale bei zumindest einigen Folgesteuersignalen von Signalen auf Eingangsleitungen aus einer von mehreren, jeweils einem anderen Folgesteuersignal zugeordneten Gruppe von Eingangsleitungen ableitet, und

daß entsprechend die Verbindungsschaltung für das Befehlswort ein von den Folgesteuersignalen gesteuerter Mehrfach-Demultiplexer ist, der zumindest einige Ausgänge des Befehlsspeicherregisters mit Ausgangsleitungen aus einer von mehreren, jeweils einem anderen Folgesteuersignal zugeordneten Gruppe von Ausgangsleitungen verbindet. Auf diese Weise brauchen nur so viele Bedingungssignale gleichzeitig verarbeitet zu werden, wie maximal in einem Prozeß auftreten, und auch die Länge des Befehlswortes kann gering gehalten werden, da der Teil, von dem die nach außerhalb führenden Ausgangssignale abgeleitet werden, sich nur nach dem Prozeß mit den meisten Ausgangssignalen richten muß. Den Verbindungsschaltungen für die Eingangssignale können dabei in üblicher Weise Speicherschaltungen wie Flipflops vorgeschaltet werden, die die von außen kommenden Signale unmittelbar übernehmen und zeitlich verlängern, damit sie noch vorhanden sind, wenn sie verarbeitet werden, um zu verhindern, daß kurze Eingangssignale verloren gehen, und in ähnlicher Weise können der Verbindungsschaltung für die Ausgangssignale Speicherschaltungen nachgeschaltet werden, die beispielsweise von einem bestimmten Ausgangssignal gesetzt werden und in diesem Zustand verbleiben, bis sie durch ein weiteres Ausgangssignal wieder zurückgesetzt werden. Dadurch können länger andauernde Ausgangssignale erzeugt werden, die insbesondere auch die Pausen überbrücken, in denen andere Prozesse ausgeführt werden.

Auch bei einem Zugriff von außerhalb auf den Datenspeicher ist eine zeitliche Anpassung wesentlich. Es ist daher zweckmäßig, daß die dem Datenspeicher zugeordnete Verbindungsschaltung einen Zugriff auf den Datenspeicher nur durch von außerhalb der Anordnung zugeführte Ansteuersignale ausführt, die durch Synchronisierschaltungen in der Verbindungsschaltung mit den Taktsignalen des Taktgenerators und mit Folgesteuersignalen synchronisiert sind, wobei mindestens ein vorbestimmtes Folgesteuersignal ein Einschreiben von Daten aus der Verknüpfungseinrichtung oder gegebenenfalls aus dem ersten Festwertspeicher in den Datenspeicher verhindert. Auch in diesem Falle können die von außerhalb kommenden und nach außerhalb gehenden Signale bzw. Daten völlig asynchron zu den Taktsignalen des Taktgenerators sein. Das Folgesteuersignal bzw. die Folgesteuersignale, bei denen das Einschreiben von Daten verhindert wird, werden von der Folgesteueranordnung zweckmäßig ebenfalls zyklisch gleichmäßig wiederholt und stellen auf die Weise einen Prozeß dar, bei dem aber tatsächlich keine Funktionen ausgeführt werden, sondern lediglich der Datenspeicher für einen Zugriff zum Einschreiben von außerhalb bzw. gegebenenfalls auch zum Auslesen bereitgestellt wird.

Da zwischen diese Folgesteuersignalen für einen Zugriff zum Datenspeicher größere Zeitabstände liegen können, ist eine Zwischenspeicherung insbesondere mehrerer von außen kommender einzuschreibender Daten günstig. Eine Weiterbildung der vorgenannten Ausgestaltung ist daher dadurch gekennzeichnet, daß die Synchronisierschaltungen einen vorzugsweise als FIFO ausgebildeten Pufferspeicher enthalten, der die der Verbindungsschaltung von außen zugeführten einzuschreibenden Daten und die Adressen dafür übernimmt und, von den Taktsignalen und den Folgesteuersignalen gesteuert, an den Datenspeicher weiterleitet. Auf diese Weise können auch mehrere einzuschreibende Daten von außerhalb nacheinander zugeführt werden, ohne daß auf den tatsächlichen Einschreibvorgang in den Datenspeicher gewartet werden muß.

Damit beim Auslesen von Daten aus dem Datenspeicher und der Ausgabe nach außerhalb eine Wartezeit wie die beim Einschreiben, die dort nur durch Pufferspeicher vermieden werden kann, nicht auftritt, ist es zweckmäßig,

wenn der Datenspeicher als Doppelzugriffsspeicher ausgeführt ist, aus dem an zwei beliebigen, über getrennte Adresseneingänge zugeführten Adressen zeitlich unabhängig voneinander Daten auslesbar und an getrennten Datenausgängen ausgebbar sind. Derartige Speicher sind bekannt und insbesondere bei nicht zu großer Kapazität einfach aufgebaut. Das Lesen sollte bzw. muß bei bestimmten Ausführungsformen des Speichers lediglich in einem bestimmten Zyklus erfolgen, der zweckmäßig durch die Taktsignale des Taktgenerators gesteuert wird, so daß dafür eine Synchronisation der von außen zugeführten Zugriffssignale erforderlich ist, wobei jedoch das Auslesen von Daten in jedem Falle längstens in einem Zyklus der Taktsignale des Taktgenerators durchgeführt ist.

Die erfindungsgemäße Datenverarbeitungsanordnung kann für viele Zwecke verwendet werden. Eine besonders vorteilhafte Anwendung ist die Steuerung von Eingabe/Ausgabegeräte-Operationen für ein übergeordnetes Datenverarbeitungssystem, wobei die erfindungsgemäße Datenverarbeitungsanordnung dann eine intelligente Schnittstelle darstellt, die das Datenverarbeitungssystem von untergeordneten Steuerfunktionen weitgehend entlastet. Eine weitere Ausgestaltung der Erfindung ist daher dadurch gekennzeichnet, daß zur quasi gleichzeitigen Steuerung von mehreren Eingabe/Ausgabegeräte-Operationen für ein übergeordnetes Datenverarbeitungssystem dieses an die Verbindungsschaltung für den Datenspeicher angeschlossen ist und daß die Eingabe/Ausgabegeräte an die Verbindungsschaltungen für die Bedingungssignale bzw. das Befehlswort angeschlossen sind. Die Steuerung von Eingabe/Ausgabegeräten erfordert allgemein nur relativ wenige Signale, während die Verbindung zum übergeordneten Datenverarbeitungssystem komplexer ist, was durch die bitparallele Verbindung zum Datenspeicher vorteilhaft berücksichtigt wird. Auf diese Weise ist die erfindungsgemäße Datenverarbeitungsanordnung als intelligente Schnittstelle zwischen der mit dem übergeordneten Datenverarbeitungssystem verbundenen Verbindungsschaltung und den mit den Eingabe/Ausgabegeräten verbundenen Verbindungsschaltungen angeordnet. Die Eingabe/Ausgabegeräte-Operationen können auch rein serielle Datenverbindungen darstellen, wobei die erfindungsgemäße Datenverarbeitungsanordnung die Erzeugung der ausgehenden seriellen Daten und die Verarbeitung der empfangenen seriellen Daten durchführt. Außerdem können parallel zu den seriellen Datenschnittstellen auch noch Timerfunktionen quasi gleichzeitig zeitverschachtelt ausgeführt werden.

Wenn ein Signal von einem Eingabe/Ausgabegerät eintrifft, wird dieses verarbeitet und das Ergebnis dem übergeordneten Datenverarbeitungssystem weitergegeben. Dieses Weitergeben kann dadurch erfolgen, daß das übergeordnete Datenverarbeitungssystem periodisch wiederholt auf den Datenspeicher zugreift und aus diesem eine bestimmte Stelle ausliest. Um jedoch das übergeordnete Datenverarbeitungssystem noch weiter zu entlasten, ist es zweckmäßig, daß ein Registersatz mit einer der Anzahl unterschiedlicher Folgesteuersignale entsprechenden Anzahl von dem übergeordneten Datenverarbeitungssystem zugänglicher, jeweils einem anderen Folgesteuersignal zugeordneter Steuerregister vorhanden ist und daß eine Verknüpfungsschaltung ein Steuersignal, insbesondere ein Unterbrechungssignal für das übergeordnete Datenverarbeitungssystem erzeugt, wenn während eines bestimmten Folgesteuersignals das zugehörige Steuerregister und gleichzeitig ein vorbestimmter Ausgang des Befehlsregisters vorgegebene Werte aufweisen. Auf diese Weise werden die bei derartigen Datenverarbeitungssystemen üblichen Unterbrechungssignale einfach erzeugt.

Dabei kann das übergeordnete Datenverarbeitungssystem angeben, daß es etwa vorübergehend keine Unterbrechungssignale verarbeiten kann, indem es in das zugeordnete Steuerregister ein entsprechendes Signal einschreibt. Dadurch kann dann die Erzeugung eines bestimmten Unterbrechungssignals verhindert bzw. auf einen späteren Zeitpunkt, wenn in das Steuerregister wieder ein anderer Signalwert eingeschrieben wird, verschoben werden.

Die Steuerung der erfindungsgemäßen Datenverarbeitungsanordnung von dem übergeordneten Datenverarbeitungssystem über den Zugriff auf den Datenspeicher kann manchmal gewisse Nachteile haben, beispielsweise ist es für bestimmte Fälle etwas umständlich und gegebenenfalls auch nicht schnell genug. Für einen einfachen und schnellen Eingriff in das erfindungsgemäße Datenverarbeitungssystem ist es daher zweckmäßig, daß der Registersatz ferner eine der Anzahl unterschiedlicher Folgesteuersignale entsprechende Anzahl von dem übergeordneten Datenverarbeitungssystem zugänglicher, jeweils einem anderen Folgesteuersignal zugeordneter Stopregister aufweist und daß eine Verknüpfungsschaltung ein das Einschreiben von Daten in alle Speicher verhindernde Sperrsignal erzeugt, wenn während eines bestimmten Folgesteuersignals das zugeordnete Stoppregister und gleichzeitig ein vorbestimmter Ausgang des Befehlsregisters vorgegebene Werte aufweisen. Wenn also bei einem bestimmten Folgesteuersignal, d.h. in einem bestimmten Prozeß, das Verändern jeglicher Speicher verhindert wird, führt dies dazu, daß derselbe Befehl immer wieder ausgeführt wird, ohne daß jedoch die Ergebnisse dieses Befehls ausgewertet werden. Damit steht dieser betreffende Prozeß auf der Stelle, bis in das betreffende Stopregister von dem übergeordneten Datenverarbeitungssystem ein anderer Signalwert eingeschrieben wird. Da andererseits ein Eingabe/Ausgabeprozeß nicht an jeder Stelle unterbrochen werden darf, beispielsweise eine serielle Datenverbindung, an der mehrere andere Geräte angeschlossen sind, die ihrerseits ebenfalls Daten aussenden können, nicht auf einem der beiden binären Signalwerte festgehalten werden darf (z.B. "niedrig"), wird das Stoppen bzw. Festhalten eines Prozesses auf der Stelle mit diesem selbst verknüpft, so daß ein Festhalten nur bei bestimmten Befehlen erfolgen kann.

Ausführungsbeispiele der Erfindung werden nachstehend anhand der Zeichnung näher erläutert. Es zeigen:

Fig. 1    ein vereinfachtes Blockschaltbild einer erfindungsgemäßen Datenverarbeitungsanordnung,

Fig. 2    ein Zeitschema zur Erläuterung der zeitlichen Folge und Verschachtelung verschiedener Vorgänge,

Fig. 3    ein ausführlicheres Blockschaltbild einer erfindungsgemäßen Datenverarbeitungsanordnung,

Fig. 4    ein Zeitschema zur Erläuterung der zeitlichen Folge und Verschachtelung der Vorgänge in der Anordnung nach Fig. 3,

Fig. 5    ein Blockschaltbild einer Verbindungsschaltung für den Datenspeicher.

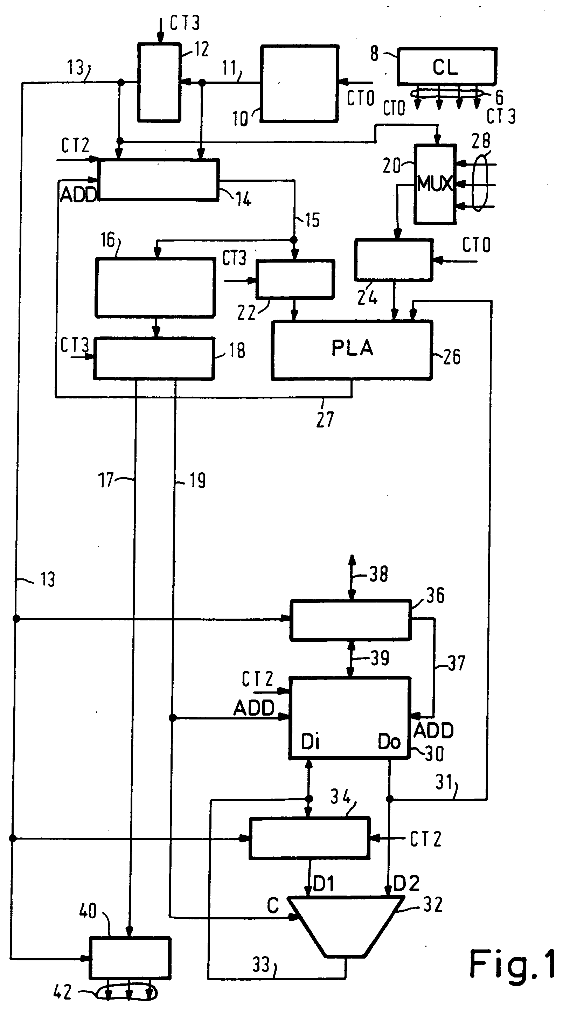

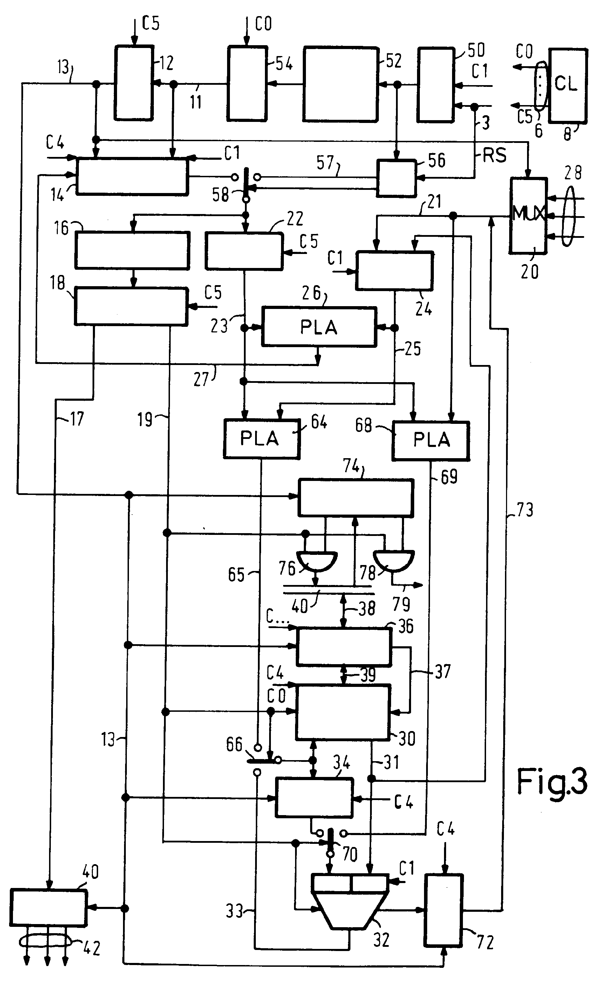

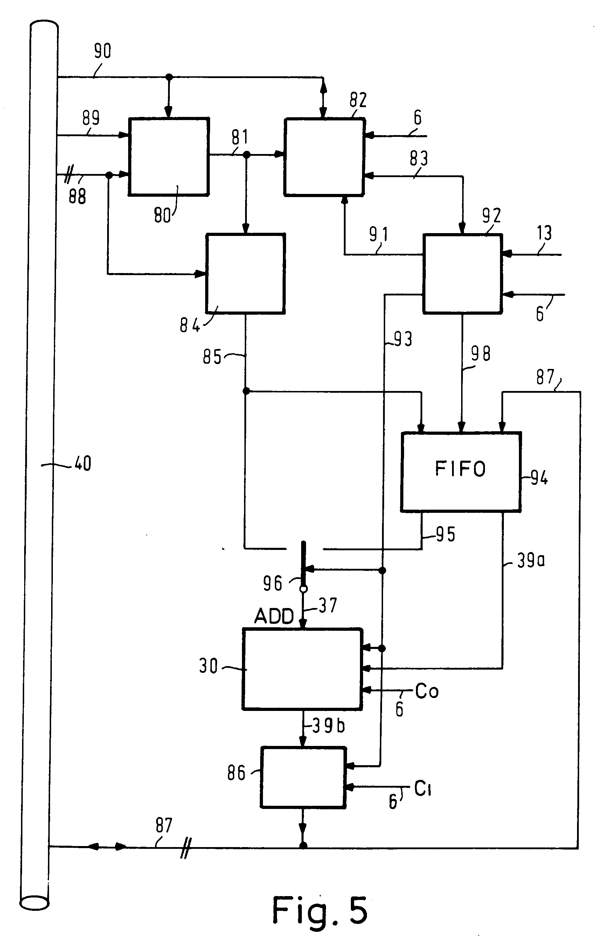

Die in Fig. 1 dargestellte Datenverarbeitungsanordnung enthält eine Anzahl bekannter und üblicher Elemente, insbesondere einen Befehlsspeicher 16, dem hier ein Register 18 nachgeschaltet ist, das die aus dem Befehlsspeicher 16 ausgelesenen Befehlswörter jeweils speichert, bis ein neues Befehlswort ausgelesen wird. Der Befehlsspeicher 16 wird adressiert von einer Anordnung aus den Elementen 22, 24 und 26, die auf der Leitung 27 die jeweils nächste Adresse des Befehlsspeichers 16 erzeugen und die dessen Adresseneingang über ein Element 14 und die Leitung 15 zugeführt werden. Diese letzteren Elemente werden später ausführlicher erläutert. Es sei an dieser Stelle darauf hingewiesen, daß die Verbindungen 15 und 27 sowie die meisten weiteren in Fig. 1 angegebenen Verbindungen tatsächlich aus einer Anzahl getrennter paralleler Leitungen bestehen, die hier nur der Einfachheit halber als einfache Verbindung dargestellt sind. Dies gilt auch für die Fig. 3 und 5.

Ferner ist eine Verknüpfungsanordnung 32 vorhanden, deren Ausgangsverbindung 33 auf den Dateneingang eines Datenspeichers 30 sowie hier auf den Dateneingang eines Pufferspeichers 34 führt. Die Verknüpfungsanordnung 32 verknüpft zwei Mehrbit-Datenwörter, die vom Pufferspeicher 34 und über die Verbindung 31 vom Datenspeicher 30 zugeführt werden, auf eine Weise, die von Informationen im Befehlswort gesteuert werden, die über die Verbindung 19 vom Befehlsregister 18 zugeführt werden. An das Befehlsregister 18 ist ferner eine Verbindung 17 angeschlossen, wobei beide Verbindungen 17 und 19 verschiedene Teile jedes Befehlswortes führen. Die Steuerung der Verknüpfungsanordnung 32 erfolgt üblicherweise nur durch wenige Bits des über die Verbindung 19 ausgegebenen Teils des Befehlswortes, während andere Bits dieses Teils den Datenspeicher 30 adressieren. Außerdem wird darüber der Datenspeicher 30 gesteuert, ob zugeführte Daten eingespeichert werden sollen oder nicht. Das Auslesen der gespeicherten Daten erfolgt bei jeder Adressierung unbedingt.

Es sei darauf hingewiesen, daß bei der Anordnung nach Fig. 1 die Verbindungen 17 und 19, die Befehlswörter oder Teile davon führen, und insbesondere die Verbindungen 31 und 33, die Datenwörter führen, hier getrennte Verbindungen sind, im Gegensatz zu vielen bekannten Datenverarbeitungsanordnungen, bei denen Befehle und Daten alle über den gleichen internen Datenbus geführt werden. In der Anordnung nach Fig. 1 kann durch diese Trennung ein Datenteil und ein Befehlsteil unterschieden werden.

Mit 8 ist ein Taktgenerator bezeichnet, der an einer Anzahl Ausgängen 6 gegeneinander verschobene Taktsignale zyklisch wiederholt erzeugt. In dem vorliegenden Beispiel werden vier verschiedene Taktsignale angenommen, die in zeitlicher Reihenfolge mit CTO bis CT3 bezeichnet sind. Diese Taktsignale werden insbesondere verschiedenen Speicherelementen in der Anordnung zugeführt. Die Anzahl der verschiedenen Taktsignale und deren genaue Lage hängt zumindest teilweise von der Realisierung der Elemente ab, beispielsweise ob die gesamte Anordnung mit den Elementen in statischer CMOS-Technik oder in dynamischer NMOS-Technik aufgebaut ist, so daß die nachfolgenden Erläuterungen nur als Beispiel zu verstehen sind. In jedem Falle bildet eine Aufeinanderfolge aller Taktsignale jeweils einen Zyklus.

Die Anordnung nach Fig. 1 ist dafür vorgesehen, mehrere Prozesse quasi parallel zeitverschachtelt durchzuführen. Dafür ist eine Folgesteueranordnung 10 vorgesehen, die nacheinander verschiedene Folgesteuersignale auf der Verbindung 11 erzeugt, wobei jedes Folgesteuersignal einem bestimmten Prozeß zugeordnet ist. Die Folgesteuersignale sind dabei vorzugsweise Mehrbit-Datenwörter, wobei die Anzahl der Bits beispielsweise der maximalen Anzahl gleichzeitig durchzuführender Prozesse entsprechen kann. Dies erfordert jedoch eine größere Anzahl von Leitungen in der Verbindung 11 und damit auch in der Verbindung 13. Um die Anzahl Leitungen zu verringern, können die Folgesteuersignale daher auch dual codiert sein. Die Folgesteueranordnung 10 kann im einfachsten Falle aus einem Zähler bestehen, der nacheinander alle Folgesteuersignale zyklisch wiederholt. Dabei ist die Aufeinanderfolge der Folgesteuersignale und damit die Zeitverschachtelung der einzelnen Prozesse jedoch festgelegt. Eine andere, flexiblere Ausführung einer Folgesteueranordnung wird später erläutert.

Die Folgesteueranordnung erhält das Taktsignal CTO, wodurch jeweils ein neues Folgesteuersignal auf der Verbindung 11 erzeugt wird. Dies wird u.a. dem Eingang eines Registers 12 zugeführt und dort mit dem Taktsignal CT3 übernommen und erscheint dann auf der Verbindung 13, d.h. das am Anfang eines Zyklus auf der Verbindung 11 erscheinende Folgesteuersignal erscheint am Ende des Zyklus auf der Verbindung 13. Die Verbindungen 11 und 13 sind mit den Adreßeingängen eines Adressenspeichers 14 verbunden, der die Adresse des jeweils nächsten Befehls der einzelnen Prozesse im Befehlsspeicher 16 enthält, die von der Anordnung 26 über die Verbindung 27 geliefert wurde. Dabei bestimmt das Folgesteuersignal auf der Verbindung 11 die Adresse des Adressenspeichers 14 die gelesen wird, wobei die darin enthaltene Befehlsadresse über die Verbindung 15 u.a. dem Adresseneingang des Befehlsspeichers 16 zugeführt wird, und das Folgesteuersignal auf der Verbindung 13 bestimmt die Adresse des Speichers 14, in der die über die Verbindung 27 zugeführte Befehlsadresse gespeichert wird, und zwar mit dem Taktsignal CT2.

Die Erzeugung der jeweils nächsten Befehlsadresse eines Prozesses erfolgt in der Anordnung 26, die hier als PLA ausgeführt ist, d.h. als eine Gatteranordnung, die aus bestimmten zugeführten Eingangssignalkombinationen bestimmte fest zugeordnete Datenwörter am Ausgang erzeugt. Die Eingangssignalkombinationen werden zum einen von einem Befehlsadressenregister 22 geliefert, das die jeweils aktuelle Befehlsspeicheradresse auf der Verbindung 15 aufnimmt, und von einem Register 24, das die über einen Multiplexer 20 auf von außen kommenden Leitungen 28 zugeführte Signale aufnimmt, sowie von zumindest einem Teil der Bits des auf der Verbindung 31 vorhandenen, aus dem Datenspeicher 30 ausgelesenen Datenwortes. Der Multiplexer 20 wird von den Folgesteuersignalen auf der Verbindung 13 gesteuert und verbindet davon abhängig eine der Leitungen 28 bzw. eine Gruppe von Leitungen mit dem Register 24. Die Leitungen 28 stellen zumindest einen Eingang der in Fig. 1 dargestellten Datenverarbeitungsanordnung dar und kommen beispielsweise von mehreren externen Peripheriegeräten, wie Eingabe- oder Ausgabegeräte, und führen beispielsweise serielle Daten oder Zustandssignale. Dadurch, daß diese Signale die Bildung der nächsten Befehlsadresse beeinflussen, werden diese Signale verarbeitet.

Entsprechend bilden die Leitungen 42 einen Ausgang der in Fig. 1 dargestellten Datenverarbeitungsanordnung, und diesen Leitungen wird über einen ebenfalls von den Folgesteuersignalen auf der Verbindung 13 gesteuerten Demultiplexer 40 über die Verbindung 17 Signale zugeführt, die von einem Teil der Ausgänge des Befehlsregisters 18 stammen. Die Leitungen 42 führen beispielsweise ebenfalls zu peripheren Geräten, und die darauf übertragenen Signale stellen beispielsweise serielle Daten oder Steuersignale dar. Ferner ist noch eine weitere Verbindung 38 nach außerhalb vorhanden, die über eine Schnittstellenschaltung bzw. Verbindungsschaltung 36 dem Datenspeicher 30 über die Datenverbindung 39 Daten zuführt bzw. aus diesem Datenspeicher ausliest, wobei die Adressen der einzuschreibenden bzw. auszulesenden Daten über die Verbindung 37 dem Datenspeicher 30 zugeführt werden. Die Verbindungsschaltung 36 wird ebenfalls von den Folgesteuersignalen auf der Verbindung 13 gesteuert, wie später näher erläutert wird. Die Verbindung 38 kann beispielsweise auf ein übergeordnetes Datenverarbeitungssystem führen, für das die in Fig. 1 dargestellte Anordnung eine intelligente Schnittstellensteuerung für Verbindungen zu Peripheriegeräten darstellt.

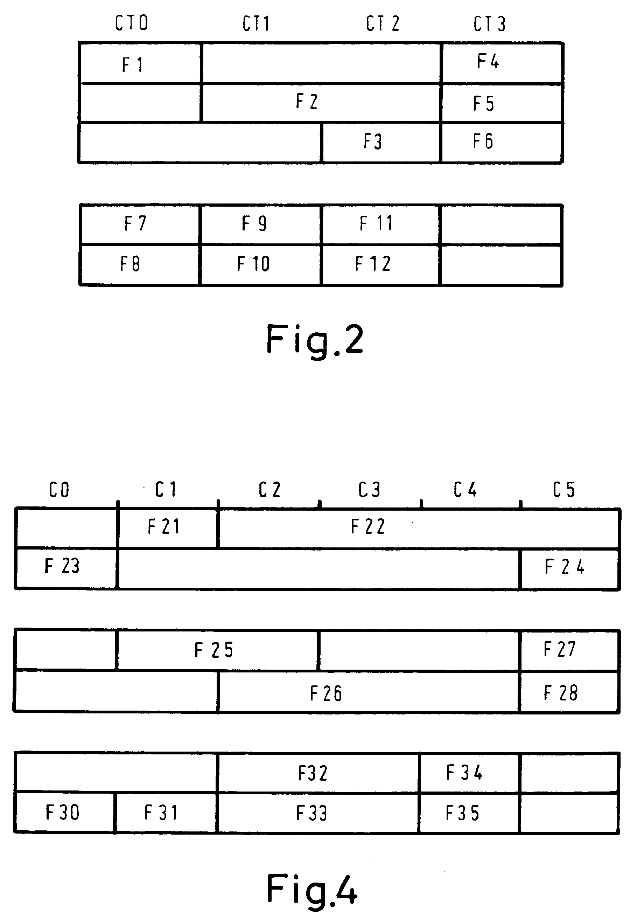

Der zeitliche Ablauf der Verarbeitungsvorgänge in der Anordnung nach Fig. 1 soll nun anhand der Fig. 2 näher erläutert werden. Dort sind die bei den einzelnen aufeinanderfolgenden Taktsignalen CTO bis CT3 durchgeführten Funktionsschritte in zwei getrennten Blöcken angegeben, die beim gleichen Taktsignal zu verschiedenen Folgesteuersignalen, d.h. zu verschiedenen Prozessen gehören oder bezogen auf dasselbe Folgesteuersignal zeitlich nacheinander ablaufen.

In diesem letzteren Sinne soll der zeitliche Ablauf nachfolgend erläutert werden, nämlich bezogen auf die vollständige Ausführung eines Befehls.

Mit dem ersten Taktsignal CTO eines Zyklus erzeugt im Funktionsschritt F1 die Folgesteueranordnung 10 ein neues Folgesteuersignal, das am Ende der Zeitdauer dieses Taktsignals gültig auf der Verbindung 11 vorhanden ist und bis zur Erzeugung des nächsten Folgesteuersignals bleibt. Damit kann mit dem nächsten Taktsignal CT1 im Schritt F2 die von diesem Folgesteuersignal adressierte Speicherstelle im Adressenspeicher 14 ausgelesen werden, so daß am Ende der Zeitdauer von CT1 auf der Verbindung 15 die Adresse des nächsten Befehls im Befehlsspeicher 16 vorhanden ist. Mit dem Taktsignal CT2 kann dann im Schritt F3 der entsprechende Befehl aus dem Befehlsspeicher 16 ausgelesen werden, der am Ende dieses Zeitabschnitts an dessen Ausgang vorhanden ist.

Zu Beginn des Taktsignals CT3 ist also das neue Folgesteuersignal am Eingang des Folgesteuerregisters 12 vorhanden und wird mit diesem Taktsignal im Funktionsschritt F4 darin eingeschrieben. Ferner ist am Eingang des Befehlsadressenregisters 22 die neue Befehlsadresse vorhanden und wird im Funktionsschritt F5 durch das Taktsignal CT3 darin eingeschrieben, und schließlich ist auch am Eingang des Befehlsregisters 18 das Befehlswort vorhanden und wird im Funktionsschritt F6 mit dem Taktsignal CT3 eingeschrieben. Damit ist auf den Verbindungen 17 und 19 der Befehl vorhanden, der in dem Prozeß ausgeführt werden soll, der durch das gleichzeitig auf der Verbindung 13 vorhandene Folgesteuersignal bestimmt ist.

Mit dem ersten Taktsignal CTO des nächsten Zyklus werden im Schritt F7 diejenigen Leitungen 28, die im Multiplexer 20 durch das Folgesteuersignal auf der Verbindung 13 ausgewählt werden und die zu dem Peripheriegerät gehören, das durch den Prozeß entsprechend diesem Folgesteuersignal gesteuert wird, dem Eingang des Registers 24 zugeführt und darin abgespeichert. Gleichzeitig wird im Funktionsschritt F8 aus dem Datenspeicher 30 an der Adresse, die durch den auf der Verbindung 19 vorhandenen Befehlswortteil gegeben ist, ein Datenwort ausgelesen und über die Verbindung 31 der Verknüpfungsanordnung 32 und dem PLA 26 zugeführt. Da der Pufferspeicher 34, der durch das Folgesteuersignal auf der Verbindung 13 adressiert wird, das an dieser Adresse vorhandene Datenwort ebenfalls am Ausgang abgibt und dem anderen Eingang der Verknüpfungsanordnung 32 zuführt, die durch bestimmte Bits in dem auf der Verbindung 19 vorhandenen Befehlswortteil auf eine bestimmte Funktion eingestellt ist, erscheint am Ende des Taktsignals CT1 im Schritt F10 das von der Verknüpfungsanordnung 32 erzeugte Datenwort auf der Verbindung 33 und gleichzeitig im Schritt F9 auf der Verbindung 27 die in dem PLA 26 erzeugte nächste Befehlsadresse für diesen Prozeß, d.h. für dieses Folgesteuersignal. Mit dem nächsten Taktsignal CT2 wird im Funktionsschritt F11 diese neue Be-

EP 0 218 280 B1

fehlsadresse in dem Adressenspeicher 14 an der dem Folgesteuersignal, d.h. dem momentanen Prozeß zugeordneten Adresse abgespeichert.

Ferner wird im Schritt F12 das Datenwort auf der Verbindung 33 in den Pufferspeicher 34 an der durch das Folgesteuersignal auf der Verbindung 13 bestimmten Adresse eingeschrieben und, gegebenenfalls abhängig von Steuersignalen im Befehlswortteil auf der Verbindung 19 im Datenspeicher 30 eingeschrieben, wobei diese letztere Einschreibadresse ebenfalls durch den Befehlswortteil auf der Verbindung 19 bestimmt ist. Damit ist ein Befehl vollständig verarbeitet.

Mit dem Taktsignal CTO in diesem Zyklus, mit dem die Schritte F7 und F8 ausgeführt werden, wird aber gleichzeitig der Schritt F1 ausgeführt, d.h. es wird das nächste Folgesteuersignal erzeugt, das allgemein zu einem anderen Prozeß für ein anderes Peripheriegerät gehört. Die weiteren Funktionsschritte F2 und F3 laufen dann zeitparallel zu den Funktionsschritten F9 und F10 bzw. F11 und F12 ab. Daraus wird klar, daß die Register 12, 18 und 22 erst mit dem Taktsignal CT3 ihren neuen Inhalt übernehmen können, nämlich wenn in den Funktionsschritten F11 und F12 die vorher erzeugte Adresse bzw. das vorher erzeugte Datenwort abgespeichert ist.

Die Verbindungsschaltung 36 zwischen der äußeren Verbindung 38 und dem Datenspeicher 30 ist in dem zeitlichen Ablaufschema der Fig. 2 nicht besonders berücksichtigt. Es wird bei der Anordnung nach Fig. 1 jedoch davon ausgegangen, daß der Datenspeicher 30 ein Doppelzugriffs-Speicher ist, der also an zwei voneinander unabhängigen Adressen zumindest gleichzeitig Daten auslesen kann. Dadurch kann eine von außerhalb über die Verbindung 38 eingehende Anfrage nach einem Datenwort in einer bestimmten Adresse des Datenspeichers 30 nahezu sofort ausgeführt werden, sie muß lediglich, zumindest bei bestimmten technischen Ausführungen des Datenspeichers 30, mit den internen Taktsignalen CT synchronisiert werden. Ein von außen über die Verbindung 38 kommender Auftrag, ein ebenfalls über diese Verbindung zugeführtes Datenwort an einer bestimmten Adresse im Datenspeicher einzuschreiben, kann jedoch nicht ohne weiteres ausgeführt werden, da beispielsweise verhindert werden muß, daß ein aus einer bestimmten Adresse ausgelesenes und auf der Verbindung 31 erscheinendes Datenwort beispielsweise beim Auslesen oder unmittelbar davor durch ein von außen kommendes Datenwort überschrieben bzw. ersetzt wird, da dadurch unvorhersehbare Zustände entstehen können. Aus diesem Grunde ist die Verbindungsschaltung 36 von dem Folgesteuersignal auf der Verbindung 13 gesteuert. Insbesondere wird dabei angenommen, daß bei mindestens einem bestimmten Folgesteuersignal kein Speicher innerhalb der in Fig. 1 dargestellten Anordnung mit Daten, die aus dieser Anordnung stammen, überschrieben wird, d.h. weder der Adressenspeicher 14 nimmt eine neue Adresse auf, noch Datenspeicher 30 oder Pufferspeicher 34 nehmen ein auf der Verbindung 33 vorhandenes Datenwort auf. Damit wird praktisch keine Funktion innerhalb der Anordnung ausgeführt, die in die Zukunft wirkt, d.h. der Ablauf in der Anordnung wird quasi angehalten bzw. tritt auf der Stelle, und bei diesem Folgesteuersignal wird die Verbindungsschaltung 36 freigegeben, so daß ein von außen kommendes Datenwort in den Datenspeicher eingeschrieben werden kann. Dabei können dann keine unvorhersehbaren Störungen auftreten.

Die in Fig. 1 dargestellte Anordnung enthält lediglich die wichtigsten Elemente, wodurch einige eventuell benötigte Funktionen kaum oder nur sehr umständlich zu realisieren sind. Eine erweiterte Anordnung, die demgegenüber flexibler arbeitet, ist in Fig. 3 dargestellt. Dabei sind mit der Fig. 1 übereinstimmende Elemente mit den gleichen Bezugszeichen gekennzeichnet.

In der Datenverarbeitungsanordnung nach Fig. 3 besteht die Folgesteueranordnung zur Erzeugung der Folgesteuersignale aus einem Zähler 50, einem von diesem Zähler adressierten Speicher 52 und einem daran angeschlossenen weiteren Folgesteuerregister 54. Außerdem ist noch eine Startlogik 56 vorhanden, die nach einem über die Leitung 3 zugeführten Rücksetzsignal, beispielsweise beim Einschalten, die Anfangs-Befehlsadressen des Befehlsspeichers 16 einstellt. Dazu wird durch das Rücksetzsignal auf der Leitung 3 der Zähler 50 in seine Anfangsstellung gesetzt und die Startlogik 56 so eingestellt, daß sie den Umschalter 58 in die rechte Lage schaltet, so daß der Eingang des Befehlsadreßregisters 22 und der Adresseneingang des Befehlsspeichers 16 mit dem Ausgang 57 der Startlogik verbunden sind. Die Ausgänge des Zählers 50 steuern auch die Startlogik 56, und diese erzeugt bei den ersten Zählerstellungen auf dem Ausgang 57 jeweils bestimmte, beispielsweise in einer Logik oder in einem Festwertspeicher festgelegte Startadressen, die entsprechend nacheinander in das Befehlsadreßregister 22 eingeschrieben werden, dessen Ausgangssignale auf der Verbindung 23 wiederum das PLA 26 veranlassen, auf der Verbindung 27 Anfangsadressen zu bilden, die auch mit den Startadressen übereinstimmen können und die nacheinander in den Adressenspeicher 14 eingeschrieben werden. Die dabei auftretende Zeitverschiebung zwischen der Stellung des Zählers 50 und dem zugehörigen Folgesteuersignal auf der Verbindung 13 kann durch die entsprechenden Startadressen berücksichtigt werden. Wenn für jedes der verschiedenen Folgesteuersignale, d.h. für jedes einem bestimmten Prozeß zugeordnete Folgesteuersignal, eine Anfangsadresse in den Adressenspeicher 14 eingespeichert ist, wobei die Anzahl dieser Folgesteuersignale bzw. Prozesse festliegt, wird der Umschalter 58 umgeschaltet, so daß der Eingang des Befehlsadreßregisters 22 und des Befehlsspeichers 16 nunmehr mit dem Ausgang des Adressenspeichers 14 verbunden sind.

Der Zähler 50 adressiert außerdem bzw. hauptsächlich den Folgesteuerspeicher 52 in zyklisch wiederholter Adressenfolge, wobei an den einzelnen Adressen bestimmte Folgesteuersignale gespeichert sind. Die Kapazität des Zählers 50 und damit auch die des Folgesteuerspeichers 52 ist hier größer als die Anzahl unterschiedlicher Folgesteuersignale, so daß diese in frei wählbarer Aufeinanderfolge mehrfach im Speicher 52 gespeichert sein können, so daß die Befehle der einzelnen Prozesse auch in unterschiedlicher Häufigkeit ausgeführt werden können. Die nachfolgende Tabelle soll ein Beispiel erläutern, namlich die Verarbeitung zweier verschiedener serieller Dateneingabe/Ausgabeverbindungen, die mit SIO und V24 bezeichnet sind, sowie zwei Timerfunktionen, die mit Timer 1 und Timer 2 bezeichnet sind. Die linke Spalte gibt die Stellungen des Zählers 50 an, und die rechte Spalte die zu dem dabei im Speicher 52 enthaltenen Folgesteuersignal gehörige Funktion bzw. Prozeß. Die leeren Felder in der rechten Spalte geben an, daß bei dem zugehörigen Folgesteuersignal keine Funktion durchgeführt wird, d.h. zu diesen Zeitpunkten kann in den Datenspeicher 30 von außen ein Datenwort eingeschrieben werden.

Da nur vier verschiedene Prozesse ausgeführt werden sollen, sind dafür nur vier verschiedene Folgesteuersignale erforderlich, die mit zwei Bit codiert werden können. Die Tatsache, daß kein Befehl ausgeführt werden soll bzw. das Einschreiben eines Datenwortes von außerhalb in den Datenspeicher 30 freigegeben ist, kann in einem dritten Bit angegeben sein. Dies bedeutet, daß die Verbindungen 11 und 13 aus drei parallelen Leitungen bestehen. Bei dem einen Wert des dritten Bits sind dabei die Speicherfunktionen, d.h. das Einschreiben in den Adressenspeicher 14 und den Pufferspeicher 34 sowie den Datenspeicher 30 von innerhalb der Anordnung gesperrt.

TABELLE

| Stellung des Zählers 50 | Prozess (Folgesteuersignal im Speicher 52) |
|:---:|:---:|
| 0 | |
| 1 | Timer 1 |
| 2 | SIO |
| 3 | V24 |
| 4 | Timer 2 |
| 5 | |
| 6 | V24 |
| 7 | Timer 1 |
| 8 | |
| 9 | SIO |
| 10 | Timer 2 |
| 11 | |
| 12 | V24 |
| 13 | Timer 1 |
| 14 | |
| 15 | SIO |
| 16 | Timer 2 |
| 17 | |
| 18 | V24 |
| 19 | Timer 1 |
| 20 | |
| 21 | SIO |
| 22 | Timer 2 |
| 23 | |
| 24 | V24 |
| 25 | Timer 1 |
| 26 | |
| 27 | SIO |
| 28 | Timer 2 |
| 29 | V24 |

Es ist klar, daß die Folge der einzelnen Folgesteuersignale bzw. Prozesse durch einen entsprechenden Inhalt im Folgesteuerspeicher 52 frei wählbar ist. Bei einfacheren Anwendungen, beispielsweise wenn die Anordnung nach Fig. 3 eine intelligente Schnittstelle zwischen einem übergeordneten Datenverarbeitungssystem und Peripheriegeräten darstellt, sind die erforderlichen Funktionen weitgehend festgelegt, und der Folgesteuerspeicher 52 ist zweckmäßig als Festwertspeicher ausgebildet. In anderen Anwendungsfällen könnte er jedoch auch als Schreib-Lese-Speicher ausgebildet werden, der unter bestimmten Voraussetzungen mit einem anderen Inhalt überschrieben werden kann, der insbesondere von außen, beispielsweise von einem übergeordneten System geliefert werden kann. Entsprechend ist klar, daß die Kapazität des Zählers 50 frei gewählt werden kann und für einfachere Anwendungen fest eingestellt ist, jedoch für andere Anwendungen auch insbesondere von außerhalb einstellbar sein kann.

Bei der in Fig. 3 dargestellten Anordnung ist die Verbindung 31, die aus dem Datenspeicher 30 ausgelesene Datenwörter führt, nicht direkt mit einem Eingang des PLA 26 verbunden, der die jeweils nächste Befehlsadresse erzeugt, sondern die Verbindung 31 führt auf einen weiteren Eingang des Registers 24, das entsprechend größer ausgelegt ist. Ferner sind zwei weitere Elemente 64 und 68 vorhanden, die hier ebenfalls als PLA ausgeführt sind, d.h. als Verknüpfungsnetzwerke, die bei bestimmten Eingangssignalkombinationen bestimmte Ausgangsdatenwörter auf den Ausgängen 65 bzw. 69 abgeben.

Das PLA 68 wird angesteuert von der im Befehlsadreßregister 22 enthaltenen aktuellen Befehlsadresse und von den von außen über die vom Multiplexer 20 ausgewählte Leitung bzw. Leitungen 28 kommenden, auf der Leitung 21 vorhandenen Signale, die wie erwähnt Bedingungssignale darstellen. Der Ausgang 69 des PLA 68 ist mit dem einen Eingang eines Umschalters 70 verbunden, der von einem bestimmten Bit im Befehlswortteil auf der Verbindung 19 gesteuert wird und der auf den einen Eingang der Verknüpfungsanordnung 32 führt. Mit diesem PLA ist es damit möglich, bei bestimmten Datenwörtern und insbesondere abhängig von äußeren Bedingungssignalen der Verknüpfungseinheit 32 unmittelbar bestimmte Datenwörter zuzuführen, ohne daß dafür eine Programmverzweigung mit mehreren Befehlsschritten erforderlich ist.

Entsprechend ist das PLA 64 von der im Befehlsadreßregister 22 vorhandenen, auf der Verbindung 23 abgegebenen momentanen Befehlsadresse und von dem über die Verbindung 25 abgegebenen Inhalt des Registers 24 angesteuert, und die Ausgangsverbindung 65 des PLA 64 ist mit dem einen Eingang eines Umschalters 66 verbunden, der ebenfalls von einem bestimmten anderen Bit des Befehlswortteils auf der Verbindung 19 gesteuert wird und das vom PLA 64 erzeugte Datenwort anstatt des von der Verknüpfungsanordnung 32 über die Verbindung 33 abgegebenen Datenwortes insbesondere dem Dateneingang des Datenspeichers 30 zuführt, so daß es darin eingeschrieben werden kann. Dieses Datenwort kann danach über die Verbindungsschaltung 36 und die Verbindung 38 nach außerhalb ausgelesen werden. Auf diese Weise kann das PLA 64 bei bestimmten Befehlen ein auf der Verbindung 31 abgegebenes Datenwort, gegebenenfalls abhängig von auf der Verbindung 21 empfangenen Bedingungssignalen, umcodieren, so daß es von einem an die externe Verbindung 38 angeschlossenen übergeordneten Datenverarbeitungssystem einfacher bzw. direkter verarbeitet werden kann.

Den beiden Eingängen der Verknüpfungsanordnung 32 sind jeweils ein Register vorgeschaltet, die als kleine Blöcke dargestellt sind und die die zugeführten Datenwörter zu einem bestimmten Zeitpunkt, wie später erläutert wird, vor der Durchführung der Verknüpfung übernehmen. Dies ist für manche technische Realisierungen des Datenspeichers 30 und des Pufferspeichers 34 günstiger, denn dann können die Datenwörter am Eingang dieser der Verknüpfungsanordnung 32 vorgeschalteten Register bereits verschwinden, bevor die Verknüpfungsanordnung 32 das Ergebnis ermittelt hat und dieses Ergebnis abgespeichert ist.

Die Verknüpfungsanordnung 32 erzeugt außer dem Datenwort auf der Verbindung 33 auch noch Steuersignale, die beispielsweise einen Bereichsüberlauf angeben und die hier auf den Eingang eines als Flagspeicher bezeichneten weiteren Speichers 72 führen, der ebenfalls von den Folgesteuersignalen adressiert ist. Derartige Steuersignale der Verknüpfungsanordnung 32 werden üblicherweise für mögliche Programmverzweigungen verwendet, und der Ausgang des Flagspeichers 72 führt daher über die Verbindungen 73 und 21 auf einen Eingang des Registers 24.

Die Signale auf den Ausgangsleitungen 42, die beispielsweise auf Peripheriegeräte führen, sind ebenso wie bei der Anordnung der Fig. 1 von einem Teil des Befehlswortes auf der Verbindung 17 über einen Demultiplexer 40 abgeleitet, der von den Folgesteuersignalen gesteuert die Verbindung 17 mit einer Leitung bzw. Gruppe von Leitungen 42 koppelt.

Die über die Verbindungsschaltung 36 nach außerhalb führende Verbindung 38 ist hier mit einem Bus 40 verbunden, der zu einem übergeordneten Datenverarbeitungssystem gehört und der der Verbindung 38 u.a. Adressensignale, die die Verbindungsschaltung 36 identifizieren und die auszulesende oder einzuschreibende Adresse im Datenspeicher 30 angeben, und außerdem Steuersignale zuführt sowie einzuschreibende Datenwörter zuführt bzw. ausgelesene Datenwörter übernimmt. Ferner wird dem übergeordneten Bus 40 ein von einem UND-Glied 76 erzeugtes Unterbrechungssignal zugeführt. Dafür ist ferner ein Registersatz 74 vorgesehen, der von den Folgesteuersignalen auf der Verbindung 13 angesteuert wird und für jedes der verschiedenen Folgesteuersignale ein Steuerregister enthält, in das über den Bus 40 eine Information eingeschrieben werden kann. Der eine Eingang des UND-Gliedes 76 ist mit dem Ausgang des vom Folgesteuersignal ausgewählten Steuerregisters verbunden und der andere Eingang mit einem bestimmten Bit des Befehlswortteils auf der Verbindung 19. Wenn also bei einem Befehl während der Abarbeitung eines bestimmten Prozesses das betreffende Befehlsbit gesetzt ist und gleichzeitig das zugeordnete Steuerregister eine vorgegebene Information enthält, wird dem übergeordneten Datenverarbeitungssystem über den Bus 40 ein Unterbrechungssignal zugeführt. Das übergeordnete Datenverarbeitungssystem kann somit bestimmen, wann es bei welchem Prozeß ein Unterbrechungssignal akzeptiert.

Der vom Folgesteuersignal adressierte Registersatz 74 enthält hier noch weitere Register, nämlich Stopregister, in die über den Bus 40 eine Information eingeschrieben werden kann. Wenn eine solche Information in einem vom Folgesteuersignal ausgewählten Stopregister enthalten ist, wird diese dem einen Eingang eines weiteren UND-Gliedes 78 zugeführt, dessen anderer Eingang von einem weiteren Bit in dem Befehlswortteil auf der Verbindung 19 angesteuert wird. Wenn dieses Bit einen bestimmten Wert hat, wird dann am Ausgang 79 ein Signal erzeugt, das das Einschreiben einer neuen Adresse in den Adressenspeicher 14, gegebenenfalls auch das Einschreiben von Datenwörtern in den Datenspeicher 30 und den Pufferspeicher 34 bei dem betreffenden Folgesteuersignal, d.h. bei dem entsprechenden Prozeß, verhindert. Dadurch hat also das übergeordnete Datenverarbeitungssystem die Möglichkeit, einen ausgewählten Prozeß an einer von diesem bestimmten Stelle anzuhalten. Dieser Prozeß wird erst dann weitergeführt, wenn über den Bus 40 in dem entsprechenden Register des Registersatzes 74 die Information gelöscht bzw. eine andere Information darin eingeschrieben wird.

Der zeitliche Ablauf der Funktionen in der Anordnung nach Fig. 3 unterscheidet sich von denen der Anordnung nach Fig. 1, da in der Anordnung nach Fig. 3 der Taktgenerator 8 hier sechs verschiedene aufeinanderfolgende Taktsignale C0 bis C6 erzeugt und vor allem dadurch, daß die Erzeugung der Folgesteuersignale mehrere Verarbeitungsschritte erfordert. Dies führt jedoch zu keiner Zeitverzögerung, wie anhand der Fig. 4 erläutert wird. Daraus ist zu erkennen, daß die Verarbeitung nunmehr in drei Ebenen erfolgt, die zeitlich gegeneinander verschoben sind, namlich während der Ausführung eines Befehls in der in Fig. 4 unten angedeuteten Ebene wird in der mittleren Ebene der nächste Befehl bereitgestellt, der zu einem anderen Prozeß gehört, und gleichzeitig wird in der oberen Ebene das übernächste Folgesteuersignal erzeugt.

Dies geschieht dadurch, daß mit dem zweiten Taktsignal C1 des ersten Zyklus im Funktionsschritt F21 der Zähler 50 um eine Stellung weitergeschaltet wird. Während der Taktsignale C2 bis C5 wird im Funktionsschritt F22 das an dieser Adresse im Folgesteuerspeicher 52 enthaltene Folgesteuersignal ausgelesen. Dies wird im zweiten Zyklus durch das Taktsignal C0 beim Funktionsschritt F23 in das Register 54 eingeschrieben, so daß es auf der Verbindung 11 erscheint. Damit wird nun bei den Taktsignalen C1 und C2 dieses zweiten Zyklus im Funktionsschritt F25 die nächste Befehlsadresse aus dem Adressenspeicher 14 ausgelesen, so daß mit den Taktsignalen C2 bis C4 im Funktionsschritt F26 der entsprechende Befehl aus dem Befehlsspeicher 16 ausgelesen wird. Mit dem letzten Taktsignal C5 dieses zweiten Taktzyklus wird im Funktionsschritt F27 die aus dem Adressenspeicher 14 ausgelesene Adresse in das Befehlsadreßregister 22 und im Funktionsschritt F28 der ausgelesene Befehl in das Befehlsregister 18 eingeschrieben. Ferner wird im Funktionsschritt F24 das auf der Verbindung 11 vorhandene Folgesteuersignal in das Register 12 eingeschrieben, d.h. eine Taktzeit, bevor in das Register 54 das nächste Folgesteuersignal eingeschrieben wird.

Mit dem ersten Taktsignal C0 des dritten Zyklus ist also das Befehlswort auf den Verbindungen 17 und 19 vorhanden, so daß nun der Datenspeicher 30 im Funktionsschritt F30 adressiert und ausgelesen wird. Außerdem empfängt jetzt das PLA 68 seine gültigen Eingangssignale, namlich die momentane Befehlsadresse auf der Verbindung 23 und die Bedingungssignale auf der Verbindung 21, während der Pufferspeicher 34 und der Flagspeicher 72 durch das jetzt gültige Funktionssteuersignal angesteuert sind. Dadurch wird mit dem nächsten Taktsignal C1 im Funktionsschritt F31 in den den beiden Eingängen der Verknüpfungsanordnung 32 vorgeschalteten Registern das anliegende Datenwort übernommen, und außerdem werden in das Register 24 die auf der Verbindung 21 vorhandenen Bedingungssignale und außerdem das auf der Verbindung 31 aus dem Datenspeicher 30 ausgelesene Datenwort eingeschrieben.

Mit den nächsten beiden Taktsignalen C2 und C3 kann nun das PLA 26 im Funktionsschritt F32 die folgende Befehlsadresse für diesen Prozeß auf der Verbindung 27 erzeugen, und die Verknüpfungseinheit 32 kann im Funktionsschritt F33 die beiden zugeführten Datenwörter verknüpfen und das Ergebnis auf der Verbindung 33 ausgeben. Mit dem nächsten Taktsignal C4 wird im Funktionsschritt F34 die auf der Verbindung 27 vorhandene nächste Befehlsadresse in den Adressenspeicher 14 eingeschrieben, wobei die Einschreibadresse durch das Folgesteuersignal auf der Verbindung 13 bestimmt ist, und im Funktionsschritt F35 wird ein möglicherweise von der Verknüpfungsanordnung 32 erzeugtes Steuersignal in den Flagspeicher 72 und das auf der Verbindung 33 erzeugte Datenwort in den Pufferspeicher 34 und gegebenenfalls in den Datenspeicher 30 eingeschrieben, wenn der Umschalter 66 in der unteren Stellung steht. Falls er sich in der oberen Stellung befindet, wird das von dem PLA 64 auf der Verbindung 65 erzeugte Datenwort in den Datenspeicher 30 eingeschrieben, da die Eingänge des PLA 64 zu diesem Zeitpunkt noch gültig sind, denn das Programmadreßregister 22 ändert seinen Inhalt erst mit dem folgenden Taktsignal C5, wie beim Funktionsschritt 27 angegeben wurde. Auf diese Weise erfolgt die Ausführung der einzelnen Befehle in dreifach zeitverschachtelter Form.

Die in den Anordnungen nach Fig. 1 und Fig. 3 verwendeten Elemente, beispielsweise Speicher, Register oder PLAs, haben einen an sich bekannten Aufbau und brauchen daher nicht näher erläutert zu werden. Lediglich die Verbindungsschaltung 36, die insbesondere die Synchronisation zwischen den zugeführten Signalen und den Taktsignalen innerhalb der Anordnung nach Fig. 1 bzw. Fig. 3 durchführen soll, wird anhand der Fig. 5 näher erläutert.

Die in Fig. 3 mit 38 bezeichnete Verbindung zum Bus 40 umfaßt in Fig. 5 eine Datenverbindung 87, die mehrere parallele Leitungen enthält und ein Datenwort parallel ausgeben oder übernehmen kann, eine Verbindung 88 mit ebenfalls einer Anzahl paralleler Leitungen, über die der Verbindungsschaltung eine Adresse zugeführt wird, sowie Steuerleitungen 89 und 90, über die Steuersignale wie Gültigkeitssignale, Schreib-Lese-Steuersignale, Bestätigungssignale und gegebenenfalls Taktsignale übertragen werden.

Von der auf der Verbindung 88 parallel zugeführten Adresse werden die höherwertigen Adressenbit einem Adressendecoder 80 zugeführt, der außerdem über die Leitung 89 ein Gültigkeitssignal empfängt, wenn die Adressensignale eingeschwungen sind. Über die Verbindung 90 kann außerdem noch ein Taktsignal zugeführt werden. Wenn der Adressendecoder 80 feststellt, daß die vom übergeordneten Datenverarbeitungssystem über den Bus 40 übertragene Adresse für die Verbindungsschaltung 36 ist, erzeugt der Adreßdecoder 80 auf der Leitung 81 ein Steuersignal, das einen Adressenpuffer 84 ansteuert, der die Adreßbits geringerer Wertigkeit einspeichert, sowie eine Zeitsteuerlogik, in der die über die Verbindung 90 zugeführten externen Taktsignale und die internen Taktsignale C synchronisiert und weitere Steuerfunktionen ausgelöst werden.

Zunächst sei angenommen, daß ein Datenwort aus dem Datenspeicher 30 gelesen werden soll. Dann wird über die höherwertigen Bits der über die Verbindung 88 zugeführten Adresse der Decoder 80 angesteuert, der über ein Signal auf der Leitung 81 den Adressenpuffer für die Adressenbits niedriger Wertigkeit ansteuert, die die Adresse im Datenspeicher 30 angeben, aus der das Datenwort ausgelesen wird. Diese Adresse erscheint nachfolgend auf der Verbindung 85.

Auf der Verbindung 90 wird ferner ein Steuersignal zugeführt, das die Leseoperation angibt. Dies wird über die Synchronisierschaltung 82 und die Verbindung 83 einer FIFO-Steuerschaltung 92 zugeführt, die beim Einschreiben von Datenwörtern einen FIFO-Speicher 94 steuert, der dann die einzuschreibenden Datenwörter zunächst übernimmt. Das Lese/Schreibsteuersignal wird über die Steuerschaltung 92 geführt, da es beim Schreiben noch mit weiteren Signalen verknüpft werden muß, wie später erläutert wird. Wenn gelesen wird, erzeugt die Steuerschaltung 92 unmittelbar auf der Leitung 93 ein entsprechendes Signal.

Dieses schaltet den Umschalter 96 in die linke Stellung, so daß die auf der Verbindung 85 vorhandene Adresse direkt über die Verbindung 37 dem externen Adresseneingang des Datenspeichers 30 zugeführt wird. Der Datenspeicher 30 liest dann unmittelbar das Datenwort an der angesteuerten Adresse aus, d.h. lediglich gesteuert durch die Taktsignale der Anordnung, wobei das Lesen mit dem Taktsignal C0 erfolgt, wie anhand der Fig. 2 im Funktionsschritt F30 erläutert wurde. Das am Datenausgang 39b, der hier im Gegensatz zur Fig. 3 getrennt gezeichnet ist, ausgelesene Datenwort wird einem Datenpuffer 86 zugeführt und mit dem nächsten Taktsignal C1 eingeschrieben. Damit ist das ausgelesene Datenwort spätestens zu Beginn des darauffolgenden Taktsignals C2 auf der zum Bus 40 führenden Verbindung 87 vorhanden, und die Synchronisierschaltung 82 erzeugt mit diesem Taktsignal ein Bestätigungssignal auf der Verbindung 90, vorausgesetzt lediglich, daß die Adresse vor dem Taktsignal C0 vorhanden war. Auf diese Weise können auch mehrere Datenwörter unmittelbar aufeinanderfolgend ausgelesen werden, sofern die Leseanfragen auf dem Bus 40 genügend schnell aufeinanderfolgen.

Wenn ein Datenwort in den Datenspeicher 30 eingeschrieben werden soll, wird die Adresse ebenfalls in der vorstehend beschriebenen Weise in den Adressenpuffer 84 eingeschrieben und das Schreibsignal über die Verbindung 83 der FIFO-Steuerschaltung 92 zugeführt. Ferner wird über die Verbindung 87 das einzuschreibende Datenwort zugeführt, wobei der Datenpuffer 86 außer bei einem Leseauftrag am Ausgang hochohmig geschaltet ist. Das Einschreiben des Datenwortes in den Datenspeicher 30 kann jedoch erst erfolgen, wenn ein entsprechendes Folgesteuersignal auftritt, das das Schreiben erlaubt. Dies kann mehrere Zyklen der Taktsignale C0 bis C5 der Anordnung dauern, so daß insbesondere in dem Fall, wenn mehrere Datenwörter unmittelbar aufeinanderfolgend eingeschrieben werden sollen, der Bus 40 des externen Datenverarbeitungssystems für längere Zeit blockiert wäre, da es zumindest die einzuschreibenden Datenwörter so lange bereithalten müßte, bis diese eingeschrieben sind. Aus diesem Grunde ist ein FIFO-Speicher 94 als Puffer vorgesehen, der mehrere aufeinanderfolgende Datenwörter aufnehmen kann. Da zu jedem Datenwort aber auch festgehalten werden muß, an welcher Adresse dies zu speichern ist, nimmt der FIFO-Speicher 94 parallel zu den Datenwörtern auch die über die Verbindung 85 zugeführten Adressen auf.

Wenn also der Auftrag zum Einschreiben eines Datenwortes eintrifft, steuert die FIFO-Steuerschaltung 92 über die Verbindung 98 den FIFO-Speicher 94 sofort an, so daß das Datenwort auf der Verbindung 87 mit der zugehörigen Adresse auf der Verbindung 85 darin eingeschrieben wird. Je nach technischem Aufbau des Speichers 94 ist es dabei höchstens erforderlich, ein bestimmtes Taktsignal des Taktzyklus in der Anordnung abzuwarten. Sobald das Einschreiben in den Speicher 94 erfolgt ist, wird über die Synchronisierschaltung 82 ein Bestätigungssignal auf der Verbindung 90 ausgegeben, so daß das nächste Datenwort mit der entsprechenden Adresse zugeführt werden kann.

Erst wenn auf der Verbindung 13 das entsprechende Folgesteuersignal auftritt, wird auf der Leitung 93 ein Schreibsignal erzeugt, wodurch der Umschalter 96 in die rechte Lage umschaltet und die als erstes in den FIFO-Speicher 94 eingeschriebene, auf der Verbindung 95 vorhandene Adresse über die Verbindung 37 dem externen Adresseneingang des Datenspeichers 30 zuführt. Gleichzeitig gibt der FIFO-Speicher 94 auf der Verbindung 39a das als erste eingespeicherte, zur Adresse gehörige Datenwort ab. Dieses wird mit dem nächsten Taktsignal C4 in den Datenspeicher 30 eingeschrieben.

Damit ein weiteres, eventuell im FIFO-Speicher 94 vorhandenes Datenwort eingeschrieben werden kann, muß das nächste Auftreten des entsprechenden Folgesteuersignals auf der Verbindung 13 abgewartet werden. Die FIFO-Steuerschaltung 92 überwacht dabei, ob noch einzuschreibende Datenwörter in dem FIFO-Speicher 94 vorhanden sind. Falls von außerhalb mehr einzuschreibende Datenwörter zugeführt werden, als im FIFO-Speicher 94 zwischengespeichert werden können, und zwar unter Berücksichtigung auch der in der Zwischenzeit möglicherweise bereits in den Datenspeicher 39 eingeschriebenen Datenwörter, erzeugt die Steuerschaltung 92 auf der Leitung 91 ein Sperrsignal, das über die Synchronisierschaltung 82 ein entsprechendes Signal auf der Verbindung 90 erzeugt, so daß über den Bus 40 zunächst keine weiteren Datenwörter zugeführt werden bzw. das zuletzt zugeführte Datenwort aufrechterhalten bleibt.

Die beschriebene Anordnung ist also besonders dafür geeignet, als Schnittstelle zwischen einem übergeordneten Datenverarbeitungssystem und mehreren externen seriellen Datenleitungen bzw. Steuerleitungen zu dienen, wobei diese Datenleitungen bzw. Steuerleitungen durch die Zeitverschachtelung quasi zeitparallel bedient werden. Die beschriebene Anordnung kann jedoch auch für andere Zwecke eingesetzt werden, wo mehrere Prozesse gleichzeitig durchzuführen sind, die keine allzu hohen Geschwindigkeitsanforderungen stellen. Dabei kann die beschriebene Anordnung im wesentlichen nur durch Anpassung des Inhalts von Steuerspeichern, wie Befehlsspeicher 16 und Folgesteuerspeicher 52, und Aufbau der PALs 26, 64 und 68 an verschiedene Aufgaben angepaßt werden.

## Patentansprüche

1. Datenverarbeitungsanordnung zur zeitverschachtelten Durchführung mehrerer Prozesse mit einem Befehlsspeicher (16) mit nachgeschaltetem Befehlsregister (18) zur Aufnahme von Befehlswörtern, einer Programmablaufsteuerung, die gegebenenfalls abhängig von Bedingungssignalen die jeweils nächste Adresse für den Befehlsspeicher erzeugt und einen Adressenspeicher (14) aufweist, der für jeden Prozeß die jeweils aktuelle Adresse für den Befehlsspeicher enthält,
einer Verknüpfungsanordnung (32), die zwei zugeführte Datenwörter entsprechend dem im Befehlsregister enthaltenen Befehlswort verknüpft,
einem der Verknüpfungsanordnung zugeordneten Pufferspeicher (34) zur Aufnahme jeweils mindestens eines Datenworts für jeden Prozeß,
einem Datenspeicher (30), dessen Daten Ein- und Ausgänge wenigstens mit einem Eingang bzw. einem Ausgang der Verknüpfungsanordnung gekoppelt sind,
nach außerhalb der Datenverarbeitungsanordnung führende Verbindungen, die über von Folgesteuersignalen gesteuerte Verbindungsschaltungen mit Elementen innerhalb der Datenverarbeitungsanordnung koppelbar sind,
einer Folgesteueranordnung (10; 50, 52, 54) zur Erzeugung einer Anzahl unterschiedlicher Folgesteuersignale, wobei jedem Prozeß ein anderes Folgesteuersignal zugeordnet ist und die Folgesteuersignale die dem jeweiligen Prozeß zugeordnete Adresse im Adressenspeicher (14) und die zugeordneten Daten im Pufferspeicher (34) adressieren,
dadurch gekennzeichnet,
daß die Folgesteueranordnung (10) zyklisch aufeinanderfolgend in einer festen Reihenfolge Folgesteuersignale erzeugt und
daß die Programmablaufsteuerung (14) einen allen Prozessen gemeinsamen Adressengenerator (26) enthält, der abhängig von der momentanen Befehlsspeicheradresse und/oder Bedingungssignale und/oder dem Inhalt der gerade adressierten Speicherstelle des Datenspeichers (30) die nächste Befehlsspeicheradresse für den zugehörigen Prozeß bildet und dessen Ausgang nur mit dem Dateneingang des Adres-

EP 0 218 280 B1

senspeichers (14) verbunden ist.

2. Datenverarbeitungsanordnung nach Anspruch 1 mit einem Taktgenerator zur zyklisch wiederholten Erzeugung einer Folge von gegeneinander zeitverschobenen Taktsignalen,
dadurch gekennzeichnet,
daß der Ausgang des Adressenspeichers (14) außerdem mit dem Eingang eines Befehlsadreßregisters (22) und der Ausgang der Folgesteueranorndung (10) außerdem mit dem Eingang eines Folgesteuerregisters (12) verbunden ist, wobei der Adressenspeicher (14) zum Lesen von dem Folgesteuersignal am Ausgang der Folgesteueranorndung (10) und der Adressenspeicher (14) zum Schreiben sowie der Pufferspeicher (34) und die Verbindungsschaltungen (20, 36, 40) von dem Folgesteuersignal am Ausgang des Folgesteuerregisters (12) adressiert werden, und
daß Steuertakteingänge (22) des Adressenspeichers (14), des Folgesteuerregisters (12), des Pufferspeichers (34) und des Datenspeichers (30) derart mit Taktausgängen (6) des Taktgenerators (8) verbunden sind, daß die Aufeinanderfolge

Erzeugung der Folgesteuersignale, Adressierung des Adreßspeichers (14) und Auslesen einer neuen Adresse für den Befehlsspeicher (16),

Auslesen des adressierten Befehlswortes und schließlich

Abspeichern des Programmwortes im Befehlsregister (18), der neuen Adresse im Befehlsadreßregister (22) und des Folgesteuersignals im Folgesteuerregister (12)
parallel zu der Aufeinanderfolge

Auslesen der vom Befehlsregister (18) adressierten Stelle des Datenspeichers (30) und des vom Folgedes Pufferspeichers (34),

Verarbeiten der ausgelesenen Daten sowie Erzeugung der neuen Befehlsspeicheradresse im Adressengenerator (26) abhängig vom Inhalt des Befehlsadreßregisters (22) und/oder Bedingungssignalen und/oder dem Inhalt des Datenspeichers und schließlich

Abspeichern des Verknüpfungsergebnisses im Datenspeicher (30) bzw. im Pufferspeicher (34) und Abspeichern der neuen Befehlsspeicheradresse im Adressenspeicher (14)
erfolgt, so daß jeweils mindestens zwei Prozesse im wesentlichen parallel ausgeführt werden.

3. Datenverarbeitungsanordnung nach Anspruch 1 oder 2,
dadurch gekennzeichnet,
daß die Folgesteueranorndung (10)
einen Folgezähler (50), dessen Kapazität mindestens gleich der maximalen Anzahl unterschiedlicher Folgesteuersignale ist, und
einen vom Folgezähler (50) adressierten Folgesteuerspeicher (52) aufweist, der in aufeinanderfolgenden Speicherplätzen unterschiedliche Folgesteuersignale enthält.

4. Datenverarbeitungsanordnung nach Anspruch 2 und 3,
dadurch gekennzeichnet,
daß die Folgesteueranorndung (10) ein weiteres Folgesteuerregister (54) enthält, das die Folgesteuersignale abgibt, und
daß Steuertakteingänge des Folgezählers (50), des Folgespeichers (52) und des weiteren Folgesteuerregisters (54) derart mit Taktausgängen (6) des Taktgenerators (8) verbunden sind, daß die Aufeinanderfolge

Weiterschalten des Folgezählers (50),

Auslesen des Folgesteuerspeichers (52),

Einschreiben des ausgelesenen Folgesteuersignals in das weitere Folgesteuerregister (54)
im wesentlichen parallel zu den anderen beiden Aufeinanderfolgen erfolgt.

5. Datenverarbeitungsanordnung nach Anspruch 3 oder 4,
dadurch gekennzeichnet,
daß die Kapazität des Folgezählers (50) durch Steuersignale einstellbar ist.

6. Datenverarbeitungsanordnung nach einem der Ansprüche 3 bis 5,
dadurch gekennzeichnet,
daß der Inhalt des Folgesteuerspeichers (52) änderbar ist.

7. Datenverarbeitungsanordnung nach Anspruch 1 oder einem der folgenden,
dadurch gekennzeichnet,

16

daß ein erster Festwertspeicher (64) vorgesehen ist, der von der momentanen bzw. der im Befehlsadreßspeicher (22) gespeicherten Adresse des Befehlsspeichers (16), den aus dem Datenspeicher (30) ausgelesenen Daten und zumindest einigen Bedingungssignalen adressiert wird und dessen Datenausgang über einen vom Befehlswort gesteuerten ersten Umschalter (66) anstelle des Ausgangs der Verknüpfungsanordnung (32) mit dem Eingang des Pufferspeichers (34) und/oder des Datenspeichers (30) verbindbar ist.

8. Datenverarbeitungsanordnung nach Anspruch 1 oder einem der folgenden,
   dadurch gekennzeichnet,
   daß ein zweiter Festwertspeicher (68) vorgesehen ist, der von der momentanen bzw. der im Befehlsadres-sensspeicher (22) gespeicherten Adresse des Befehlsspeichers (16) und zumindest einigen Bedingungssignalen adressiert wird und dessen Datenausgang über einen vom Befehlswort gesteuerten zweiten Umschalter (70) anstelle des Pufferspeichers (34) mit einem Eingang der Verknüpfungsanordnung (32) verbindbar ist.

9. Datenverarbeitungsanordnung nach Anspruch 1 oder einem der folgenden,
   dadurch gekennzeichnet,
   daß beiden Eingängen der Verknüpfungsanordnung (32) sowie den Eingängen für Datensignale und/oder Bedingungssignale des Adressengenerators (26) und gegebenenfalls des ersten Festwertspeichers (64) je ein Pufferregister (24, 60, 62) vorgeschaltet ist und alle Pufferregister die zugeführten Informationen unmittelbar nach dem Auslesen des Datenspeichers (30) bzw. Pufferspeichers (34) übernehmen.

10. Datenverarbeitungsanordnung nach Anspruch 1 oder einem der folgenden,
    dadurch gekennzeichnet,
    daß einem Steuerausgang (Übertrag, Nulldurchgang bzw. Vorzeichenwechsel) der Verknüpfungsanordnung (32) ein Flagspeicher (72) mit einer ebenfalls durch die Anzahl unterschiedlicher Folgesteuersignale bestimmten Anzahl Speicherplätze, die von den Folgesteuersignalen adressiert sind, nachgeschaltet ist, wobei der Ausgang des Flagspeichers (72) mindestens ein Bedingungssignal liefert.

11. Datenverarbeitungsanordnung nach Anspruch 1 oder einem der folgenden,
    dadurch gekennzeichnet,
    daß die Verbindungsschaltung (20) für die Bedingungssignale ein von den Folgesteuersignalen gesteuerter Mehrfach-Multiplexer ist, der zumindest einige der Bedingungssignale bei zumindest einigen Folgesteuersignalen von Signalen auf Eingangsleitungen (28) aus einer von mehreren, jeweils einem anderen Folgesteuersignal zugeordneten Gruppe von Eingangsleitungen ableitet, und daß entsprechend die Verbindungsschaltung (40) für das Befehlswort ein von den Folgesteuersignalen gesteuerter Mehrfach-Demultiplexer (40) ist, der zumindest einige Ausgänge des Befehlsspeicherregisters (18) mit Ausgangsleitungen (42) aus einer von mehreren, jeweils einem anderen Folgesteuersignal zugeordneten Gruppe von Ausgangsleitungen verbindet.

12. Datenverarbeitungsanordnung nach Anspruch 1 oder einem der folgenden,
    dadurch gekennzeichnet, daß die dem Datenspeicher (30) zugeordnete Verbindungsschaltung (36) einen Zugriff auf den Datenspeicher (30) nur durch von außerhalb der Anordnung zugeführte Ansteuersignale ausführt, die durch Synchronisierschaltungen (82, 90, 92, 94) in der Verbindungsschaltung (36) mit den Taktsignalen des Taktgenerators (8) und mit Folgesteuersignalen synchronisiert sind, wobei mindestens ein vorbestimmtes Folgesteuersignal ein Einschreiben von Daten aus der Verknüpfungseinrichtung (32) oder gegebenenfalls aus dem ersten Festwertspeicher (64) in den Datenspeicher (30) verhindert.

13. Datenverarbeitungsanordnung nach Anspruch 12,
    dadurch gekennzeichnet, daß die Synchronisierschaltungen einen vorzugsweise als FIFO ausgebildeten Pufferspeicher (92) enthalten, der die der Verbindungsschaltung (36) von außen zugeführten einzuschreibenden Daten und die Adressen dafür übernimmt und, von den Taktsignalen und den Folgesteuersignalen gesteuert, an den Datenspeicher (30) weiterleitet.

14. Datenverarbeitungsanordnung nach Anspruch 12 oder 13,
    dadurch gekennzeichnet, daß der Datenspeicher (30) als Doppelzugriffsspeicher ausgeführt ist, aus dem an zwei beliebigen, über getrennte Adresseneingänge zugeführten Adressen zeitlich unabhängig voneinander Daten auslesbar und an getrennten Datenausgängen (31, 39) ausgebbar sind.

**15.** Datenverarbeitungsanordnung nach Anspruch 1 oder einem der folgenden,
<u>dadurch gekennzeichnet</u>, daß zur quasi gleichzeitigen Steuerung von mehreren Eingabe/Ausgabegeräte-Operationen für ein übergeordnetes Datenverarbeitungssystem dieses an die Verbindungsschaltung (36) für den Datenspeicher (30) angeschlossen ist und daß die Eingabe/Ausgabegeräte an die Verbindungsschaltungen (20, 40) für die Bedingungssignale bzw. das Befehlswort angeschlossen sind.

**16.** Datenverarbeitungsanordnung nach Anspruch 15,
<u>dadurch gekennzeichnet</u>, daß ein Registersatz (74) mit einer der Anzahl unterschiedlicher Folgesteuersignale entsprechenden Anzahl von dem übergeordneten Datenverarbeitungssystem zugänglicher, jeweils einem anderen Folgesteuersignal zugeordneter Steuerregister vorhanden ist und daß eine Verknüp-fungsschaltung (76) ein Steuersignal, insbesondere ein Unterbrechungssignal für das übergeordnete Datenverarbeitungssystem erzeugt, wenn während eines bestimmten Folgesteuersignals das zugehörige Steuerregister und gleichzeitig ein vorbestimmter Ausgang des Befehlsregisters vorgegebene Werte aufweisen.

**17.** Datenverarbeitungsanordnung nach Anspruch 15 oder 16,
<u>dadurch gekennzeichnet</u>, daß der Registersatz (74) ferner eine der Anzahl unterschiedlicher Folgesteuersignale entsprechende Anzahl von dem übergeordneten Datenverarbeitungssystem zugänglicher, jeweils einem anderen Folgesteuersignal zugeordneter Stopregister aufweist und daß eine Verknüpfungs-schaltung (76) ein das Einschreiben von Daten in allen Speicher (14, 30, 34, 72) veränderndes Sperrsignal erzeugt, wenn während eines bestimmten Folgesteuersignals das zugeordnete Stopregister und gleichzeitig ein vorbestimmter Ausgang des Befehlsregisters (18) vorgegebene Werte aufweisen.

## Revendications

**1.** Dispositif de traitement de données destiné à exécuter plusieurs opérations imbriquées dans le temps, comportant une mémoire d'instructions (16) avec un registre d'instructions (18) monté en aval pour enregistrer des mots d'instructions, une commande de déroulement de programme, qui produit, éventuellement en fonction de signaux de condition, l'adresse respective suivante de la mémoire d'instructions et présente une mémoire d'adresses (14) qui contient, pour chaque opération, l'adresse actuelle respective pour la mémoire d'instructions, un dispositif de combinaison logique (32), qui combine deux mots de données acheminés en fonction du mot d'instruction contenu dans le registre d'instructions, une mémoire tampon (34) affectée au dispositif de combinaison logique pour enregistrer respectivement au moins un mot de données pour chaque opération, une mémoire de données (30), dont les entrées et sorties de données sont couplées au moins à une entrée ou une sortie du dispositif de combinaison logique, des connexions menant à l'extérieur du dispositif de traitement de données, qui peuvent être couplées, via des circuits de connexion commandés par des signaux de commande de séquence, avec des éléments internes au dispositif de traitement de données, un dispositif de commande de séquence (10; 50, 52, 54) destiné à produire un certain nombre de signaux de commande de séquence différents, étant entendu qu'à chaque opération est affecté un autre signal de commande de séquence et que les signaux de commande de séquence adressent l'adresse affectée à une opération respective dans la mémoire d'adresses (14) et les données associées dans la mémoire tampon (34), caractérisé en ce que le dispositif de commande de séquence (10) produit de manière successive et cyclique, en une série fixe, des signaux de commande de séquence et la commande de déroulement de programme (14) contient un générateur d'adresses (26) commun à toutes les opérations, qui forme, en fonction de l'adresse de la mémoire d'instructions du moment et/ou de signaux de condition et/ou du contenu de l'emplacement de la mémoire de données (30) que l'on vient d'adresser, l'adresse suivante de la mémoire d'instructions pour l'opération en question et dont la sortie n'est connectée qu'à l'entrée de données de la mémoire d'adresses (14).

**2.** Dispositif de traitement de données selon la revendication 1, comportant un générateur de cadence pour produire de manière répétée et cyclique une séquence de signaux de cadence décalés les uns des autres en fonction du temps, caractérisé en ce que la sortie de la mémoire d'adresses (14) est également connectée à l'entrée d'un registre d'adresses d'instructions (22) et la sortie du dispositif de commande de séquence (10) est, en outre, connecté a l'entrée d'un registre de commande de séquence (12), la mémoire d'adresses (14) pour la lecture du signal de commande de séquence étant adressée à la sortie du dispositif de commande de séquence (10) et la mémoire d'adresses pour l'écriture ainsi que la mémoire tampon (34) et les circuits de connexion (20, 36, 40) étant adressés par le signal de commande de séquence à la sortie du registre de commande de séquence (12), et en ce que les entrées de cadence de commande (22) de la mémoire d'adresses (14), du registre de commande de séquence (12), de la mémoire tampon (34) et de la mémoire de données (30) sont connectées aux sorties de cadence (6) du générateur de cadence (8), de telle sorte que la succession d'opérations :

production du signal de commande de séquence,

adressage de la mémoire d'adresses (14) et extraction d'une nouvelle adresse pour la mémoire d'instructions (16),

extraction du mot d'instruction adressé et enfin,

stockage du mot de programme dans le registre d'instructions (18), de la nouvelle adresse dans le registre d'adresses d'instructions (22) et du signal de commande de séquence dans le registre de commande de séquence (12),

s'effectue en parallèle avec la succession d'opérations :

extraction de l'emplacement de la mémoire de données (30) adressé par le registre d'instructions (18) et de l'emplacement de la mémoire tampon (34) adressé par le registre de commande de séquence (12),

traitement des données extraites ainsi que

production de la nouvelle adresse de la mémoire d'instructions dans le générateur d'adresses (26) en fonction du contenu du registre d'adresses d'instructions (22) et/ou de signaux de condition et/ou du contenu de la mémoire de données et enfin

stockage du résultat de combinaison logique dans la mémoire de données (30) ou dans la mémoire tampon (34), et

stockage de la nouvelle adresse de la mémoire d'instructions dans la mémoire d'adresses (14), de telle sorte que, respectivement, au moins deux opérations soient réalisées sensiblement en parallèle.

3. Dispositif de traitement de données selon la revendication 1 ou 2, caractérisé en ce que le dispositif de commande de séquence (10) est un compteur de séquence (50) dont la capacité est au moins égale au nombre maximum de signaux de commande de séquence différents, et comporte une mémoire de commande de séquence (52) adressée par le compteur de séquence (50), qui contient des signaux de commande de séquence différents dans des emplacements successifs de la mémoire.

4. Dispositif de traitement de données selon les revendications 2 et 3, caractérisé en ce que le dispositif de commande de séquence (10) contient un autre registre de commande de séquence (54), qui délivre les signaux de commande de séquence, et en ce que des entrées de cadence de commande du compteur de séquence (50), de la mémoire de séquence (52) et de l'autre registre de commande de séquence (54) sont connectées aux sorties de cadence (6) du générateur de cadence (8), de telle sorte que la succession des opérations :

reconnexion du compteur de séquence (50),

extraction de la mémoire de commande de séquence (52), et

inscription du signal de commande de séquence extrait dans l'autre registre de commande de séquence (54),

s'effectue sensiblement en parallèle avec les deux autres successions d'opérations.

5. Dispositif de traitement de données selon la revendication 3 ou 4, caractérisé en ce que la capacité du compteur de séquence (50) peut être réglée par des signaux de commande.

6. Dispositif de traitement de données selon l'une quelconque des revendications 3 à 5, caractérisé en ce que le contenu de la mémoire de commande de séquence (52) peut être modifié.

7. Dispositif de traitement de données selon la revendication 1 ou selon l'une quelconque des revendications suivantes, caractérisé en ce qu'il est prévu une première mémoire morte (64) qui est adressée par l'adresse de la mémoire d'instructions (16) du moment ou l'adresse stockée dans la mémoire d'adresses d'instructions (22), par les données extraites de la mémoire de données (30) et par au moins certains signaux de condition et dont la sortie de données peut être connectée à l'entrée de la mémoire tampon (34) et/ou de la mémoire de données (30) via un premier commutateur (66) commandé par le mot d'instruction, au lieu de la sortie du dispositif de combinaison logique (32).

8. Dispositif de traitement de données selon la revendication 1 ou l'une quelconque des revendications suivantes, caractérisé en ce qu'il est prévu une deuxième mémoire morte (68) qui est adressée par l'adresse de la mémoire d'instructions (16) du moment ou l'adresse stockée dans la mémoire d'adresses d'instructions (22) et par au moins quelques signaux de condition et dont la sortie de données peut être connectée à une entrée du dispositif de combinaison logique (32) via un deuxième commutateur (70) commandé par le mot d'instruction en lieu et place de la mémoire tampon (34).

9. Dispositif de traitement de données selon la revendication 1 ou l'une quelconque des revendications suivantes, caractérisé en ce qu'un registre tampon (24, 60, 62) est chaque fois monté en amont des deux entrées du dispositif de combinaison logique (32) ainsi que des entrées pour les signaux de données et/ou les signaux de condition du générateur d'adresses (26) et éventuellement de la première mémoire morte (64) et que tous les registres tampons reprennent les informations qui leur sont acheminées directement après extraction de la mémoire de données (30) ou de la mémoire tampon (34).

10. Dispositif de traitement de données selon la revendication 1 ou l'une quelconque des revendications suivantes, caractérisé en ce que l'on monte en aval d'une sortie de commande (report, passage par zéro ou changement de signe) du dispositif de combinaison logique (32) une mémoire d'indicateurs (72) avec un nombre d'emplacements de stockage déterminé par le nombre de signaux de commande de séquence différents, qui sont adressés par les signaux de commande de séquence, la sortie de la mémoire d'indicateurs (72) délivrant au moins un signal de condition.

11. Dispositif de traitement de données selon la revendication 1 ou l'une quelconque des revendications suivantes, caractérisé en ce que le circuit de connexion (20) pour les signaux de condition est un multiplexeur multiple commandé par les signaux de commande de séquence, qui dérive au moins certains des signaux de condition, dans le cas d'au moins certains signaux de commande de séquence, de signaux présents sur des lignes d'entrée provenant d'un groupe de lignes d'entrée parmi plusieurs associées chaque fois à un autre signal de commande de séquence, et de manière correspondante, le circuit de connexion (40) pour le mot d'instruction est un démultiplexeur multiple (40) commandé par les signaux de commande de séquence, qui connecte au moins certaines sorties du registre de mémoire d'instructions (18) à des lignes de sortie (42) d'un groupe de lignes de sortie parmi plusieurs associées chaque fois à un autre signal de commande de séquence.

12. Dispositif de traitement de données selon la revendication 1 ou l'une quelconque des revendications suivantes, caractérisé en ce que le circuit de connexion (36) affecté à la mémoire de données (30) n'assure un accès à la mémoire de données (30) que par des signaux de commande acheminés de l'extérieur du dispositif, ces signaux étant synchronisés par des circuits de synchronisation (82, 90, 92, 94) du circuit de connexion (36) avec les signaux de cadence du générateur de cadence (8) et avec des signaux de commande de séquence, de sorte qu'au moins un signal de commande de séquence prédéterminé empêche une inscription de données provenant du dispositif de combinaison logique (32) ou éventuellement de la première mémoire morte (64) dans la mémoire de données (30).

13. Dispositif de traitement de données selon la revendication 12, caractérisé en ce que les circuits de synchronisation contiennent une mémoire tampon (92) se présentant de préférence sous la forme d'une mémoire FIFO, qui prend en charge les données a inscrire acheminées de l'extérieur au circuit de connexion (36) et les adresses prévues a cet effet, et sous la commande des signaux de cadence et des signaux de commande de séquence, les transmet à la mémoire de données (30).

14. Dispositif de traitement de données selon la revendication 12 ou 13, caractérisé en ce que la mémoire de données (30) se présente sous la forme d'une mémoire à accès double de laquelle des données peuvent être extraites indépendamment les unes des autres dans le temps à deux adresses quelconques acheminées via des entrées d'adresses séparées et peuvent être délivrées de la même manière à des sorties de données séparées (31, 39).

15. Dispositif de traitement de données selon la revendication 1 ou l'une quelconque des revendications suivantes, caractérisé en ce que, pour effectuer la commande quasi simultanée de plusieurs opérations d'appareils d'entrée/sortie pour un système de traitement de données principal, celui-ci est raccordé au circuit de connexion (36) pour la mémoire de données (30) et que les appareils d'entrée/sortie sont raccordés aux circuits de connexion (20, 40) pour les signaux de condition ou le mot d'instruction.

16. Dispositif de traitement de données selon la revendication 15, caractérisé en ce qu'un jeu de registres (74) est présent comprenant un nombre de registres de commande accessibles par le système de traitement de données principal et respectivement affectés chacun à un autre signal de commande de séquence, nombre correspondant au nombre des différents signaux de commande de séquence, et qu'un circuit de combinaison logique (76) produit un signal de commande, en particulier un signal d'interruption pour le système de traitement de données principal lorsqu'au cours d'un signal de commande de séquence déterminé, le registre de commande concerné et simultanément une sortie prédéterminée du registre d'instructions présentent des valeurs prédéterminées.

17. Dispositif de traitement de données selon la revendication 15 ou 16, caractérisé en ce que le jeu de registres (74) comprend, en outre, un nombre de registres d'arrêt accessibles par le système de traitement de données principal, affectés chacun à un autre signal de commande de séquence, ce nombre correspondant aux différents signaux de commande de séquence, et en ce qu'un circuit de combinaison logique (76) produit un signal d'arrêt empêchant l'inscription de données dans toutes les mémoires (14, 30, 34, 72) lorsqu'au cours d'un signal de commande de séquence déterminé, le registre d'arrêt affecté et, simultanément, une sortie prédéterminée du registre d'instructions (18) présentent des valeurs prédéfinies.

## Claims

1. A data processing device for the time-interleaved execution of a plurality of processes, comprising
   an instruction memory (16) which is succeeded by an instruction register (18) for storing instruction words,
   a program sequencer which generates, possibly in dependence on condition signals, each time the next address for the instruction memory and which comprises an address memory (14) which stores the relevant current address for the instruction memory for each process,
   a combinatory device (32) which, in conformity with the instruction word stored in the instruction register, combines two data words supplied,
   a buffer memory (34) which is associated with the combinatory device and which serves to store each time at least one data word for each process,
   a data memory (30) whose data inputs and outputs are coupled at least to an input and an output, respectively, of the combinatory device,
   connections which are connected to the environment external to the data processing device and which can be coupled, via connection circuits controlled by sequence control signals, to elements within the data processing device,
   a sequencer (10; 50, 52, 54) for generating a plurality of different sequence control signals, to each process there being assigned a different sequence control signal and the sequence control signals addressing the address, associated with the relevant process, in the address memory (14) and the associated data in the buffer memory (34),
   characterized in that
   the sequencer (10) generates sequence control signals cyclically successively in a fixed sequence, and that the program sequencer (14) comprises an address generator (26) which is common to all processes and which forms, in dependence on the instantaneous instruction memory address and/or condition signals and/or the contents of the currently addressed memory location of the data memory (30), the next instruction memory address for the associated process, and whose output is connected only to the data input of the address memory (14).

2. A data processing device as claimed in Claim 1, comprising a clock generator for cyclically repeatedly generating a sequence of mutually time-shifted clock signals,
   characterized in that
   the output of the address memory (14) is also connected to the input of an instruction address register (22), the output of the sequencer (10) also being connected to the input of a sequence control register (12), the address memory (14) being addressed for reading by the sequence control signal on the output of the sequencer (10), for writing the address memory (14) being addressed, as well as the buffer memory (34) and the connection circuits (20, 36, 40), by the sequence control signal on the output of the sequence control register (12), control clock inputs (22) of the address memory (14), of the sequence control register (12), of the buffer memory (34) and of the data memory (30) being connected to clock outputs (6) of the clock generator (8) in such a manner that the sequence consisting of:
   generating the sequence control signals,
   addressing the address memory (14) and reading a new address for the instruction memory (16),
   reading the addressed instruction word, and finally
   storing the program word in the instruction register (18), the new address in the instruction address register (22), and the sequence control signal in the sequence control register (12), is performed in parallel with the sequence:

reading the data memory (30) location addressed by the instruction register (18) and the buffer memory (34) location addressed by the sequence control register (12),

processing the data read as well as generating the new instruction memory address in the address generator (26) in dependence on the contents of the instruction address register (22) and/or condition signals and/or the contents of the data memory, and finally

storing the combination result in the data memory (30) or in the buffer memory (34) and storing the new instruction memory address in the address memory (14),

so that each time at least two processes are executed essentially in parallel.

3. A data processing device as claimed in Claim 1 or 2, <u>characterized in that</u> the sequencer (10) is formed by a sequence counter (50) whose capacity equals at least the maximum number of different sequence control signals and which includes a sequence control memory (52) which is addressed by the sequence counter (50) and which stores different sequence control signals in successive memory locations.

4. A data processing device as claimed in the Claims 2 and 3, <u>characterized in that</u> the sequencer (10) includes a further sequence control register (54) which outputs the sequence control signals, control clock inputs of the sequence counter (50), of the sequence memory (52) and of the further sequence control register (54) being connected to clock outputs (6) of the clock generator (8) so that the sequence composed of:

advancing the sequence counter (50),

reading the sequence control memory (52),

writing the sequence control signal read into the further sequence control register (54),

is performed essentially in parallel with the other two sequences.

5. A data processing device as claimed in Claim 3 or 4, <u>characterized in that</u> the capacity of the sequence counter (50) can be adjusted by means of control signals.

6. A data processing device as claimed in any one of the Claims 3 to 5, <u>characterized in that</u> the contents of the sequence control memory (52) can be modified.

7. A data processing device as claimed in Claim 1 or any one of the subsequent Claims, <u>characterized in that</u> there is provided a first read-only memory (64) which is addressed by the current address of the instruction memory (16) or the address stored in the instruction address memory (22), by the data read from the data memory (30), and by at least some condition signals, and whose data output can be connected, via a first switch (66) which is controlled by the instruction word, to the input of the buffer memory (34) and/or the data memory (30) instead of the output of the combinatory device (32).

8. A data processing device as claimed in Claim 1 or any one of the subsequent Claims, <u>characterized in that</u> there is provided a second read-only memory (68) which is addressed by the current address of the instruction memory (16) or the address stored in the instruction address memory (22), and by at least condition signals, and whose data output can be connected, via a second switch (70) which is controlled by the instruction word, to an input of the combinatory device (32) instead of the buffer memory (34).

9. A data processing device as claimed in Claim 1 or any one of the subsequent Claims, <u>characterized in that</u> both inputs of the combinatory device (32) as well as the inputs of the data signals and/or condition signals of the address generator (26), and possibly of the first read-only memory (64), are preceded by a respective buffer register (24, 60, 62), all buffer registers taking over the applied data immediately after the reading of the data memory (30) or the buffer memory (34).

10. A data processing device as claimed in Claim 1 or any one of the subsequent Claims, <u>characterized in that</u> a control output (carry, zero crossing, change of sign) of the combinatory device (32) is followed by a flag memory (72) which has a number of memory locations which is also determined by the number of different sequence control signals, which memory locations are addressed by the sequence control signals, the output of the flag memory (72) supplying at least one condition signal.

11. A data processing device as claimed in Claim 1 or any one of the subsequent Claims, <u>characterized in that</u> the connection circuit (20) for the condition signals is formed by a multiple multiplexer which is con-

EP 0 218 280 B1

trolled by the sequence control signals and which derives at least some of the condition signals for at least some sequence control signals from signals on input lines (28) of one of a plurality of groups of input lines, each group being associated with a different sequence control signal, the connection circuit (40) for the instruction word being a multiple demultiplexer (40) which is controlled by the sequence control signals and which connects at least some outputs of the instruction memory register (18) to output lines (42) of one of a plurality of groups of output lines associated each time with a different sequence control signal.

12. A data processing device as claimed in Claim 1 or any one of the subsequent Claims, characterized in that the connection circuit (36) associated with the data memory (30) accesses the data memory (30) only by means of control signals which are supplied from outside the device and which are synchronized, using synchronization circuits (82, 90, 92, 94) in the connection circuit (36), with the control signals of the clock generator (8) and with sequence control signals, at least one predetermined sequence control signal inhibiting the writing of data from the combinatory device (32) or possibly from the first read-only memory (64), into the data memory (30).

13. A data processing device as claimed in Claim 12, characterized in that the synchronization circuits include a buffer memory (92) which is preferably constructed as a FIFO and which takes over the data to be written, applied to the connection circuit (36) from the environment, and the associated addresses for supply to the data memory (30) under the control of the clock signals and the sequence control signals.

14. A data processing device as claimed in Claim 12 or 13, characterized in that the data memory (30) is constructed as a dual-access memory wherefrom data can be read at two arbitrary addresses, applied via separate address inputs, in a time-independent manner for output on separate data outputs (31, 39).

15. A data processing device as claimed in Claim 1 or in any one of the subsequent Claims, characterized in that for the quasi-simultaneous control of a plurality of input/output device operations for a higher-order data processing system, this data processing system is connected to the connection circuit (36) for the data memory (30), the input/output devices being connected to the connection circuits (20, 40) for the condition signals or the instruction word.

16. A data processing device as claimed in Claim 15, characterized in that there is provided a set of registers (74), including a number of control registers which corresponds to the number of different sequence control signals, said control registers being accessible by the higher-order data processing system and each register being associated with a respective sequence control signal, a combinatory circuit (76) generating a control signal, notably an interrupt signal, for the higher-order data processing system when, during a given sequence control signal, the associated control register and at the same time a predetermined output of the instruction register carry predetermined values.

17. A data processing device as claimed in Claim 15 or 16, characterized in that the set of registers (74) also includes a number of stop registers which corresponds to the number of different sequence control signals, said stop registers being accessible by the higher-order data processing system and being associated with a respective sequence control signal, a combinatory circuit (76) generating a blocking signal which modifies the writing of data in all memories (14, 30, 34, 72) when the associated stop register and a predetermined output of the instruction register (18) simultaneously carry predetermined values during a given sequence control signal.

23

Fig.1

CT0  CT1  CT2  CT3

| F 1 | | | F 4 |
| | F 2 | | F 5 |
| | | F 3 | F 6 |

| F 7 | F 9 | F 11 | |
| F 8 | F 10 | F 12 | |

## Fig.2

C0  C1  C2  C3  C4  C5

| | F 21 | F 22 | | | |
| F 23 | | | | | F 24 |

| | F 25 | | | F 27 |
| | | F 26 | | F 28 |

| | | F32 | F 34 | |
| F 30 | F 31 | F 33 | F 35 | |

## Fig.4

EP 0 218 280 B1

Fig.3

26

Fig. 5